(19) **Europäisches Patentamt European Patent Office Office européen des brevets**

(11) **EP 2 139 152 B1**

(12) **EUROPEAN PATENT SPECIFICATION**

(45) Date of publication and mention of the grant of the patent:
**05.10.2016 Bulletin 2016/40**

(51) Int Cl.:
*H04J 3/06* (2006.01)   *H04L 12/701* (2013.01)
*H04L 12/727* (2013.01)   *H04L 12/841* (2013.01)

(21) Application number: **08738862.5**

(22) Date of filing: **26.03.2008**

(86) International application number:
**PCT/JP2008/055636**

(87) International publication number:
**WO 2008/123272 (16.10.2008 Gazette 2008/42)**

(54) **COMMUNICATION DEVICE, SYNCHRONIZED COMMUNICATION SYSTEM, AND SYNCHRONIZED COMMUNICATION METHOD**

KOMMUNIKATIONSGERÄT, SYNCHRONISIERTES KOMMUNIKATIONSSYSTEM UND SYNCHRONISIERTES KOMMUNIKATIONSVERFAHREN

DISPOSITIF DE COMMUNICATION, SYSTÈME DE COMMUNICATION SYNCHRONISÉ, ET PROCÉDÉ DE COMMUNICATION SYNCHRONISÉ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.03.2007 JP 2007085682**

(43) Date of publication of application:
**30.12.2009 Bulletin 2009/53**

(73) Proprietor: **Kabushiki Kaisha Yaskawa Denki Kitakyushu-shi, Fukuoka 806-0004 (JP)**

(72) Inventors:
• **KOGA, Hidetsugu**
  **Fukuoka 806-0004 (JP)**

• **FUKUDA, Mamoru**
  **Fukuoka 806-0004 (JP)**
• **SATOU, Tatsuhiko**
  **Fukuoka 806-0004 (JP)**

(74) Representative: **Gendron, Vincent Christian et al Fédit-Loriot**
  **38, avenue Hoche**
  **75008 Paris (FR)**

(56) References cited:
  **EP-A1- 0 515 029      EP-A2- 0 260 696**
  **WO-A1-03/028258      JP-A- 10 091 222**
  **JP-A- 10 142 361      JP-A- 11 305 812**
  **JP-A- 2007 189 457      US-A- 5 177 739**
  **US-A1- 2006 271 805**

**Description**

Technical Field

The present invention relates to a synchronized communication method in which all communication devices connected to a transmission path are synchronized with a reference time in a communication system, a communication device used therefor, and a synchronized communication system therefor.

Background Art

In manufacturing systems, generally, a single control device such as a programmable controller or a personal computer periodically exchanges command data and response data with a plurality of devices such as sensors, relays, and servo drives to perform control. Each device is connected to a transmission path, and the exchange of command data and response data is performed in constant communication cycles through communication. In particular, in motion control systems for machine tools, chip mounters, and the like, a motion controller forms a control loop together with servo drives through a transmission path.

Therefore, a synchronized communication system in which the exchange of command data and response data can be realized in steady communication cycles is demanded to allow these devices to operate in synchronization with the communication cycles. In order to achieve such enhancement in performance of motion control, it is necessary to synchronize the timings of starting the processing of command data received by the servo drives and the like from the motion controller so that the amount of synchronization deviation thereof can be minimized and it is also necessary to shorten as much as possible the communication cycle in which the motion controller and the servo drives exchange command data and response data.

Conventionally, in order to synchronize all communication devices connected to a transmission path with a reference time in a communication system, a method has been adopted in which a communication device that manages the reference time informs one or more other communication devices of the reference time.

For example, in a case where three communication devices are connected in parallel to a transmission path and among them one communication device (first communication device) manages a reference time, a method has been adopted in which the first communication device sends the reference time to the remaining two communication devices (a second communication device #1 and a second communication device #2) via broadcasting so that the two second communication devices can receive it and adjust in-device reference timers.

In this case, the times at which the two second communication devices receive the data sent by the first communication device are different. This is because a time (propagation delay time) is required for a signal to propagate along the transmission path, resulting in the occurrence of a difference between the arrival times depending on the length of the transmission path.

However, the difference in the propagation delay time between the communication devices has a very small value. In such a communication system, the first communication device broadcasts communication data at the beginning of a communication cycle, and all the second communication devices that have received it operate in synchronization with the receiving timings, which is sufficient to realize a synchronized communication system with a small amount of synchronization deviation between the communication devices.

Incidentally, in the OA field, Ethernet (registered trademark), which adopts a 100 BASE-T or 1000 BASE-T physical layer, has been widespread as means for connecting personal computers, printers, and the like to perform high-speed communication. In a communication system based on Ethernet, devices are generally connected point-to-point. Devices such as personal computers and printers are connected to a HUB, and the HUB serves as a relay station to perform a transfer when data is sent and received between communication devices.

A HUB serving as a relay station is generally implemented as a switching HUB having a switching function as shown in Patent Document 1 in Fig. 10-b, and Store & Forward is adopted as a general transfer mode. Store & Forward uses a procedure for storing all units in a communication frame, starting from the beginning to the end, in a buffer, performing an error check, and transferring a unit that shows a normal result to a port to which a destination device is connected.

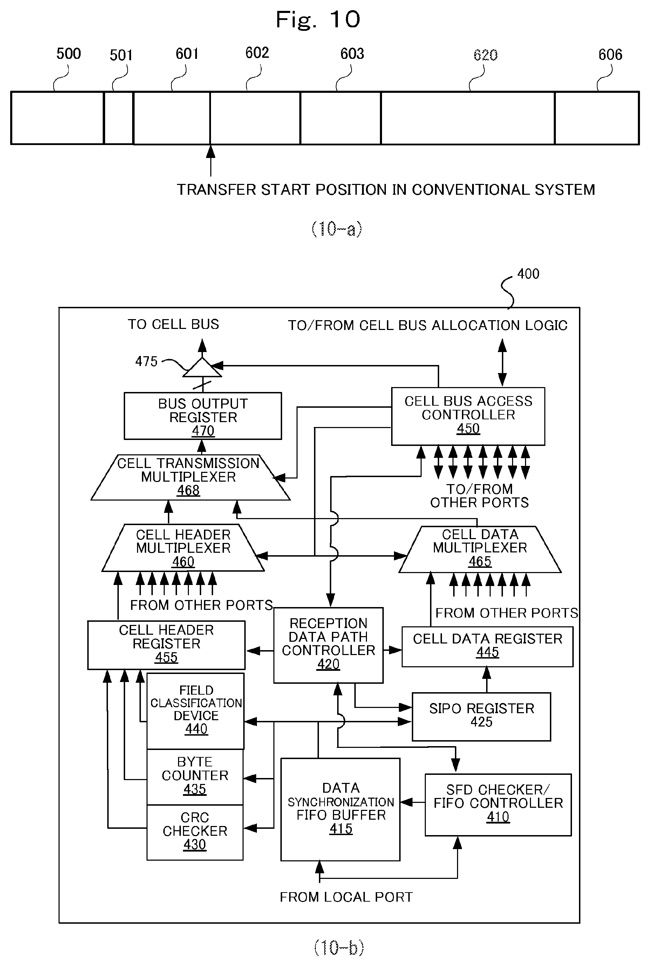

Fig. 10-a shows the format of an Ethernet communication frame. The communication frame is composed of a preamble 500 (7 bytes), an SFD 501 (Start Frame Delimiter, 1 byte), a destination address 601 (6 bytes), a source address 602 (6 bytes), a type 603 (2 bytes), data 620 (46 to 1500 bytes), and an FCS 606 (Flame Check Sequence, 4 bytes), and the minimum frame length is 64 bytes, from the destination address 601 to the FCS 606.

As described previously, in Store & Forward, a communication frame is transferred after the end thereof has been received. Thus, in the case of a transmission speed of 100 Mbps, a transfer delay time of at least 5.2 μs, which is required for receiving the SFD (1 byte) and the minimum frame length of 64 bytes, occurs in a communication device.

Some switching HUBs implement Cut-through as another transfer mode for reducing this transfer delay time.

Cut-through is a transfer method in which a transfer to the port to the destination device is connected is started at a timing when the destination address 601 is received. Even in this method, however, a transfer delay time of 560 ns, which is required for receiving the SFD (1 byte) and the destination address (6 bytes), occurs in a communication device.

An Ethernet communication system in the OA field generally has a configuration in which communication devices are connected in parallel with a HUB therebetween. In industrial fields such as on a production line, however, devices are often connected in series to a transmission path in order to save wiring. In recent years, due to the feature of improved transmission speed, a tendency has been to apply the Ethernet technology in the industrial fields. However, in a case where communication devices are connected in series to a transmission path, the transfer delay time of a relay communication device affects performance.

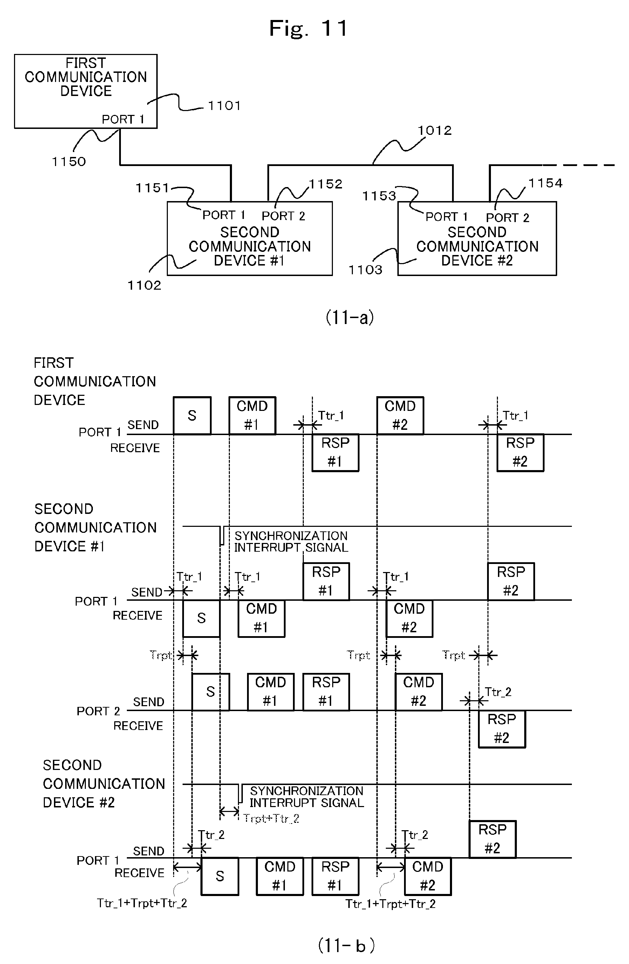

Fig. 11-a is a configuration diagram of a conventional system in which communication devices that perform relaying by Cut-through described above are connected in series. In the figure, reference numeral 1101 denotes a first communication device that manages a reference time, reference numerals 1102 and 1103 denote second communication devices #1 and #2 that operate in synchronization with the communication device 1101. In the case of a manufacturing system, the first communication device corresponds to, for example, a programmable controller or a personal computer, and the second communication devices correspond to, for example, servo drives, sensors, relays, or the like.

Here, a port 1 (1150) of the first communication device and a port 1 (1151) of the second communication device #1 are connected in series, and a port 2 (1152) of the second communication device #1 and a port 1 (1153) of the second communication device #2 are connected in series. When the first communication device and the second communication device #2 exchange communication data, the second communication device #1 relays the communication data. For example, when data is sent from the first communication device to the second communication device #2, the data sent by the first communication device passes through the second communication device #1 from the port 1 (1151) and is output from the port 2 (1152). Thereafter, the data is received by the second communication device #2 via the port 1 (1153).

Fig. 11-b is an exemplary timing chart showing timings of communication and synchronous operations in a conventional system. In the figure, symbol S denotes a synchronization frame that is broadcast by the communication device 1101 at the beginning of a communication cycle in order to perform communication synchronization across the entire system. Symbol CMD #1 denotes a command frame sent from the communication device 1101 to the communication device 1102, and symbol RSP #1 denotes a response frame sent from the communication device 1102 to the communication device 1101. The command frame is used for notification about relay ON/OFF or a target position of a servo drive, and the response frame is used for notification about a current value of a sensor or a position feedback value of a servo drive. Symbols CMD #2 and RSP #2 are a command frame and a response frame to and from the communication device 1103, respectively, and have content equivalent to the CMD #1 and the RSP #1.

Next, a control start timing will be explained. It is assumed that the propagation delay time in the transmission path between the second communication device #n and the previous communication device is represented by Ttr_n, the transfer delay time in the relay communication device is represented by Trpt, and the second communication devices #1 and #2 perform a synchronous operation by causing a communication synchronization interrupt at the timing of receiving the synchronization frame S sent from the first communication device. In this case, due to the propagation delay in the transmission path and the transfer delay, there is a time difference of (Trpt + Ttr_2) between the timings of causing a communication synchronization interrupt by the second communication devices #1 and #2.

Here, if the sum of the transfer delay time in a communication device and the propagation delay time of the transmission path is called a transmission path delay time, the transmission path delay time #n required until the synchronization frame S sent by the first communication device is received by the second communication device #n is expressed by the equation below. Here, it is assumed that Trpt has the same value for all the communication devices.

Transmission path delay time #n:

$$Tdly\_n = (n-1)Trpt + \sum_{i=1}^{n} Ttr\_i$$

Thus, in order to allow a plurality of second communication devices or devices connected to the second communication devices to operate synchronously, a reference time held by each second communication device must have been obtained by correcting a reference time held by the first communication device using the transmission path delay time.

As an example for measuring a transmission path delay time, there is a method in which each return delay time (the time required for data to reciprocate) with a communication device that manages a reference time is determined and in which a delay time to each communication device is measured on the assumption that the time required for outgoing communication and the time required for incoming communication are equal.

Fig. 9 shows an example of a conventional communication system referenced in Patent Document 2. In Fig.

9, n communication devices 1001 to 1005 are connected in series to a transmission path 1012. In this configuration, in order to synchronize the clock times of the individual communication devices, first, the first communication device 1001 sends data for measurement to the second communication device 1002 twice, and the second communication device 1002 returns this measurement data at the input end and output end, thereby measuring a propagation delay time Tab (= Tba) and an in-device transfer delay time TB1 (= TB2).

Thereafter, similarly, the first communication device sends the measurement data to the third communication device 1003, and measures delay times Tbc (= Tcb) and TC1 ($\equiv$ TC2). Likewise, the first communication device 1001 measures delay times for up to the n-th communication device 1005 and then notifies each communication device of the delay time. Each communication device corrects its clock time using the delay time notified by the first communication device 1001, and synchronizes the clock time to the reference time.

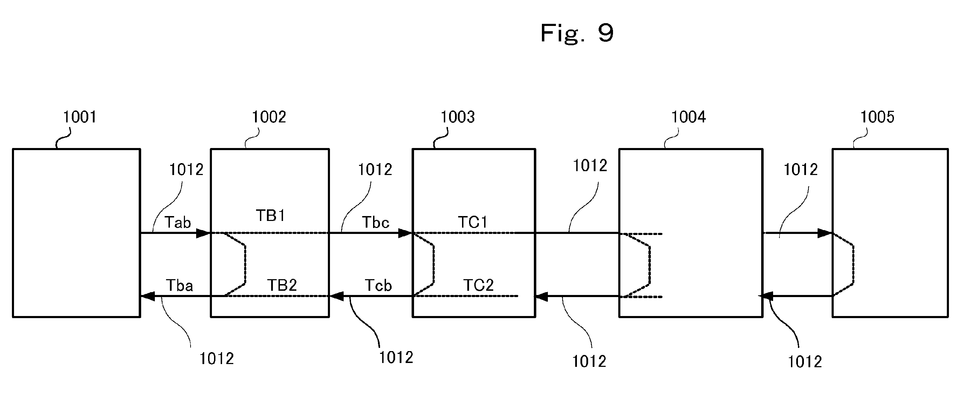

In the communication system as shown in Fig. 9, however, since the outgoing and incoming communications pass through different internal memories in the communication devices, a difference between the delay time for the outgoing communication and the delay time for the incoming communication causes an error in the delay time.

In addition, the above-described transmission path delay time also occurs when the first communication device sends a command frame to the second communication device #n or when the second communication device #n sends a response frame to the first communication device, resulting in an unnecessary lag time, which is twice the time given in the equation above, in the response time occurring when the first communication device exchanges the command frame and the response frame with the second communication device #n.

For example, in the case of a communication system in which ten second communication devices are connected, a lag time of 10.08 $\mu$s is caused only in the transfer delay time in the tenth communication device. Therefore, in all the ten second communication devices, a total lag time of 50.4 $\mu$s is caused only in the transfer delay times. When the communication cycle which is on the order of 100 $\mu$s is performed, this occupies the majority of the communication cycle. Consequently, the communication cycle cannot be reduced, and the performance of motion control cannot be improved even with the use of high-speed communication. [Patent Document 1] Japanese Unexamined Patent Application Publication (Translation of PCT Application) No. 2000-503828 (page 39, Fig. 4)

[Patent Document 2] Japanese Unexamined Patent Application Publication No. 10-142361 (page 6, Fig. 4)

Disclosure of Invention

Patent Document EP 0 515 029 A1 discloses a repeater system for a time-division multiplex communication system, comprising a master station, a first repeater station, second repeater station, etcetera. Each of the repeater stations comprises a frame synchronisation circuit, a loop-back circuit and a repeater number calculating circuit. The repeater number calculating circuit calculates the repeater number depending on the number of "layers" from the master station. Any higher numbered repeater, i.e. a repeater higher up in the repeating chain, can be synchronised to any repeater lower in the repeater chain. For this purpose, the repeater lower in the chain can set a loop-back circuit, allowing an accurate synchronisation to be carried out, irrespective of the distance from a repeater station to the master station. Document WO 03/028258 A1 discloses a method for synchronising nodes of a communications system comprising the steps of receiving a first synchronisation message by a first node, whereby said first synchronisation message contains a desired receipt time by the first node, and correcting a time base of the first node, based on a deviation between an actual receipt time, determined as a result of the time base, and the desired receipt time.

Problems to be Solved by the Invention

The present invention has been made in view of such problems, and it is an object of the present invention to provide a communication device, a synchronized communication system, and a synchronized communication method in which even when communication devices are connected in series to a transmission path, delay times are measured and a reference time of each slave is corrected so that the control cycle start timing is specified and synchronized on a reference time basis and in which the transfer delays of the communication devices can be reduced to realize synchronized communication with as small a communication cycle as possible.

Means for Solving the Problems

In order to overcome the foregoing problems, the present invention is configured as follows.

The invention according to Claim 1 provides a communication device including a communication control section that is connected to a transmission path and that controls data to be sent and received, and a host CPU that is connected to the communication control section and that executes a calculation process based on data received by the communication control section and data in a built-in connected-device information storage section to create transmission data and sends the transmission data to the communication control section,

wherein the communication control section includes two PHY sections each of which converts a logic signal into an electrical signal, two Rx FIFO sections (reception first-in first-out sections) that are connected to the PHY sections and that receive data received by the PHY sections, two Tx FIFO sections (transmission first-in first-out sections) that are connected to the PHY sections and that output the received data to the PHY sections, and a LINK section having a built-in in-device reference timer that generates an interrupt signal at a preset timing,

wherein each of the two Rx FIFO sections and each of the two Tx FIFO sections are connected via a relay path, and the two relay paths and the LINK section are connected to each other, and

wherein the LINK section sends a synchronization-correction-target specifying frame, a transmission path delay measurement frame, and a synchronization frame.

Further, the invention according to Claim 2 provides a communication device including a communication control section that is connected to a transmission path and that controls data to be sent and received, and a host CPU that is connected to the communication control section and that executes a calculation process based on data received by the communication control section and data in a built-in local information storage section to create transmission data and sends the transmission data to the communication control section,

wherein the communication control section includes two PHY sections each of which converts a logic signal into an electrical signal, two Rx FIFO sections (reception first-in first-out sections) that are connected to the PHY sections and that receive data received by the PHY sections, two Tx FIFO sections (transmission first-in first-out sections) that are connected to the PHY sections and that output the received data to the PHY sections, and a LINK section having a built-in in-device reference timer that generates an interrupt signal at a preset timing,

wherein each of the two Rx FIFO sections and each of the two Tx FIFO sections are connected via a relay path, and the two relay paths and the LINK section are connected to each other, wherein a path selection switch is inserted into each of the two relay paths, and one of a return path is connected to each of the two relay paths, the path selection switch being connected to the other end of the return path when the path selection switch disconnects the corresponding one of the relay paths, operations of the two path selection switches being performed at the same time,

wherein in a normal state, the LINK section forms a relay path over which the path selection switches are not caused to perform a switching operation and over which data received by one of the PHY sections is transferred to the other PHY section, but upon receipt of a synchronization-correction-target specifying frame, the LINK section forms a return path over which the path selection switches are caused to perform a switching operation to return data received by the PHY sections,

wherein upon receipt of a transmission path delay measurement frame a predetermined number of times after receiving the synchronization-correction-target specifying frame, the LINK section forms the relay path again using the path selection switches, and

wherein upon receipt of the synchronization frame sent from the communication device according to Claim 1, the in-device reference timer is corrected so as to be synchronized with a reference time in a communication system.

Further, the invention according to Claim 3 provides the communication device according to Claim 1, wherein each of the Rx FIFO sections includes an SFD (frame start signal) detection section disposed upstream thereof, and upon detection of an SFD that follows a preamble in data received by one of the PHY sections, a corresponding one of the SFD detection sections immediately transfers the received data to the transmission path from the other PHY section.

Further, the invention according to Claim 4 provides the communication device according to Claim 2, wherein each of the Rx FIFO section includes an SFD (frame start signal) detection section disposed upstream thereof, and upon detection of an SFD that follows a preamble in data received by one of the PHY sections, a corresponding one of the SFD detection sections immediately transfers the received data to the transmission path from the other PHY section.

Further, the invention according to Claim 5 provides a synchronized communication system including a first communication device according to Claim 1 or 3, and one or more second communication devices according to Claim 2 or 4, the first communication device and the second communication devices performing communication in a predetermined communication cycle,

wherein one of two PHY sections of each communication device is connected to a PHY section of another communication device, and the other PHY section is connected to a PHY section of another communication device,

wherein the first communication device separately measures transmission path delay times to the second communication devices, separately notifies the devices of the transmission path delay times, and sends a current reference time value in the communication system for each communication cycle, and

wherein each of the second communication devices corrects the received current reference time value using the notified transmission path delay time, and sets the corrected value in its in-device reference timer.

Further, the invention according to Claim 6 provides the synchronized communication system according to Claim 5, wherein the first communication device stores an interrupt output time in the synchronization frame and sends the synchronization frame to the second communication devices, and each of the second communication devices sets the received interrupt output time in its in-device reference timer and outputs a synchronization interrupt signal when a value of the timer has reached the interrupt output time.

Further, the invention according to Claim 7 provides the synchronized communication system according to Claim 5 or 6, wherein after the first communication device starts synchronized communication with a constant communication cycle including sending a synchronization frame and a command frame to the second communication devices and receiving response frames from the second communication devices, when the first communication device detects the second communication device that has been newly connected to the synchronized communication system during the synchronized communication with the second communication devices, the first communication device measures a transmission path delay time to the second communication device and notifies the second communication device of the transmission path delay time within a time that remains after predetermined communication has been performed in the communication cycle.

Further, the invention according to Claim 8 provides a synchronized communication method in which in a communication system in which one first communication device and one or more second communication devices are connected to a transmission path, each communication device including a communication control section that controls transmission/reception data and a host CPU section that executes a calculation process based on data received by the communication control section to create transmission data, the communication devices perform synchronized communication,
the method including the steps of specifying a synchronization-correction-target communication device in accordance with information about the second communication devices that is stored in advance in a connected-device information storage section; sending a transmission path delay measurement frame to the synchronization-correction-target communication device and at the same time storing a sending time; in a case of receiving return data from the synchronization-correction-target communication device, storing a receiving time, and in a case of receiving no return data, additionally writing delay measurement failure into the connected-device information storage section; calculating a transmission path delay time from the sending time and the receiving time and additionally writing the transmission path delay time into the connected-device information storage section; and notifying the synchronization-correction-target communication device of the calculated transmission path delay time, wherein the first communication device repeats the steps on all the second communication devices stored in the connected-device information storage section and then starts synchronized communication.

Further, the invention according to Claim 9 provides the synchronized communication method according to Claim 8, further including the steps of, during the synchronized communication, after the first communication device performs predetermined communication including sending a synchronization frame and a command frame to the second communication devices and receiving response frames from the second communication devices:

checking a response from a second communication device for which delay measurement failure is stored in the connected-device information storage section; when no response is received, waiting for the end of the communication cycle and performing synchronized communication again; when a response is received, calculating a transmission path delay measurement time and checking whether transmission path delay measurement is possible within a remaining time in the communication cycle; when transmission path delay measurement is not possible within the remaining time, waiting for the end of the communication cycle and performing synchronized communication again; when transmission path delay measurement is possible within the remaining time, specifying a synchronization-correction-target communication device; sending a transmission path delay measurement frame to the synchronization-correction-target communication device and at the same time storing a sending time; in a case of receiving return data from the synchronization-correction-target communication device, storing a receiving time, and in a case of receiving no return data, waiting for the end of the communication cycle and performing synchronized communication again; calculating a transmission path delay time from the sending time and the receiving time and additionally writing the transmission path delay time into the connected-device information storage section; notifying the synchronization-correction-target communication device of the calculated transmission path delay time; and waiting for the end of the communication cycle and performing synchronized communication again.

Further, the invention according to Claim 10 provides the synchronized communication method according to Claim 9, wherein the transmission path delay measurement time is calculated using a maximum value of transmission path delay times stored in the connected-device information storage section, the number of times the delay measurement is performed, and a relay time in a communication device determined by circuit configuration.

Further, the invention according to Claim 11 provides the synchronized communication method according to Claim 8 or 9, wherein each of the second communication devices, when specified as a synchronization-correction-target communication device by the first communication device, performs the steps of setting a path selection switch so as to return received data to a source of the received data, connecting the path selection switch to a relay destination in a case where the second communication device has received the transmission delay measurement frame from the first communication device and has been notified of a transmission path delay time, and correcting an in-device reference timer using the transmission path delay time and a reference time contained in a synchronization frame sent from the first communication device, thereby performing synchronization between the reference time and the in-device reference timer.

Further, the invention according to Claim 12 provides the synchronized communication method according to Claim 8 or 9, wherein each of the second communication devices stores a number of times delay measurement is performed, the number of times being contained in the synchronization-correction-target specifying frame, connects the path selection switch to a delay destination after receiving a transmission path delay measurement frame the number of times of delay measurement + 1 times, upon receipt of a transmission path delay measurement frame, stores a transmission path delay time contained in the transmission path delay measurement frame, and corrects an in-device reference timer using the transmission path delay time and a current reference time value contained in a subsequently received synchronization frame.

Advantages

According to the invention according to Claim 1, 2, 5, 8 or 11, a path selection switch is mounted in a relay path in a second communication device. A first communication device can only control this switching switch to easily and accurately measure a transmission path delay time for each second communication device, and can notify each second communication device of the measurement result and a reference time of a synchronized communication system. Then, the second communication device corrects its reference time using the transmission path delay time and the reference time. Therefore, a reference time synchronized with the reference time of the first communication device can be utilized.

According to the invention according to Claim 6, each of the second communication devices can generate an interrupt signal at a preset timing. Therefore, devices connected to all the second communication devices can start processes for command data included in command frames at the same timing.

According to the invention according to Claim 7, 9, or 11, a second communication device that has been newly connected during synchronized communication by a communication system at a constant communication cycle can be notified of a transmission path delay time measured by the first communication device without disturbing the communication cycle of the synchronized communication. The second communication device can perform synchronized communication.

Further, according to the invention according to Claim 10, the first communication device can estimate a time required for measuring a transmission path delay time for a newly connected second communication device.

According to the invention according to Claim 12, the first communication device can measure a transmission path delay time for each of the second communication devices a plurality of times, and can more accurately obtain a transmission path delay time.

According to the invention according to Claim 3 or 4, SFD detection sections are provided upstream of two Rx FIFO sections provided in each communication device, and no monitoring of data subsequent to the frame start signal of the received data is performed in the relay paths. Thus, data can be passed to the relay paths only when the correct SFD that follows the preamble has been detected. Further, in particular, in a system that requires series connection, like the Cut-through scheme, unnecessary relaying of erroneous data is eliminated and only necessary data can be relayed at a higher speed. Consequently, the transfer delay time required when, for example, ten communication devices are connected in series can be reduced from 50.4 $\mu$s to 7.2 $\mu$s as compared with the conventional Cut-through scheme.

Brief Description of Drawings

[Fig. 1] Fig. 1 is a block diagram showing the configuration of a communication device that applies a method of the present invention.

[Fig. 2] Fig. 2 is an illustration of an example configuration of a connected-device information storage section.

[Fig. 3] Fig. 3 is an illustration of an example configuration of a local information storage section.

[Fig. 4] Fig. 4 is an illustration of an example of a communication system to which the present invention is applied.

[Fig. 5] Fig. 5 is a flowchart showing a delay measurement procedure of a first communication device of the present invention.

[Fig. 6] Fig. 6 is a flowchart showing a delay measurement procedure of a second communication device of the present invention.

[Fig. 7] Fig. 7 is a flowchart showing a delay measurement procedure during synchronized communication by the first communication device of the present invention.

[Fig. 8] Fig. 8 includes illustrations of examples of data formats for communication of the present invention; (8-a) shows a synchronization-correction-target specifying frame, (8-b) shows a transmission path delay measurement frame, (8-c) shows a synchronization frame, (8-d) shows a command frame, and (8-e) shows a response frame.

[Fig. 9] Fig. 9 is an illustration of the configuration of a conventional communication system.

[Fig. 10] Fig. 10 includes illustrations of the configuration of a standard communication frame and communication device, (10-a) shows the configuration of a standard communication frame, and (10-b) shows the configuration of a standard communication device.

[Fig. 11] Fig. 11 includes illustrations of the configuration of a conventional communication system and a timing chart, (11-a) shows the configuration of a conventional communication system, and (11-b) shows a timing chart of the conventional communication system.

[Fig. 12] Fig. 12 is a timing chart of communication synchronization of the present invention.

Reference Numerals

1 first communication device of the present invention
2 second communication device #1 of the present invention
3 second communication device #2 of the present invention
4 second communication device #3 of the present invention
5 transmission path
10, 20 host CPU section
100, 200 communication control section
11 connected-device information storage section
1110 connectable-number storage area for second communication devices
1102 second communication device #1
111 information storage section for second communication device #1
1111 address storage area for second communication device #1
1112 transmission-path delay measurement completion/failure information storage area for second communication device #1
1113 transmission path delay time storage area for second communication device #1
1103 second communication device #2
112 information storage section for second communication device #2
1121 address storage area for second communication device #2
1122 transmission-path delay measurement completion/failure information storage area for second communication device #2
1123 transmission path delay time storage area for second communication device #2
11n information storage section for second communication device #n
11n1 address storage area for second communication device #n
11n2 transmission-path delay measurement completion/failure information storage area for second communication device #n
11n3 transmission path delay time storage area for second communication device #n
21 local information storage section
211 number-of-times-of-delay-measurement storage area
212 transmission path delay time storage area
213 reference time storage area
110, 210 PHY section
115, 215 SFD detection section
116, 216 reception signal
117, 217 transfer permission signal
118, 218 interrupt signal
120, 220 Tx FIFO section
130, 230 Rx FIFO section
140, 240 LINK section
141, 241 in-device reference timer
250 path selection switch
160, 260 relay path
261 return path
500 preamble
501 SFD (frame start flag)
601 destination address
602 source address
603 data type

604 data length
605 number of times of delay measurement
606 FCS
615 transmission path delay time
616 current reference time value
617 interrupt output time
618 command data
619 response data
620 data
1001, 1101 first conventional communication device
1002 second conventional communication device
1003 third conventional communication device
1004 (n-1)-th conventional communication device
1005 n-th conventional communication device
1012 conventional transmission path
1150, 1151, 1153 port 1
1152, 1154 port 2

Best Mode for Carrying Out the Invention

A specific exemplary embodiment of the present invention will be explained hereinafter with reference to the drawings. In the following, even in different figures, components having the same device numerals represent the same content.

[Embodiments]

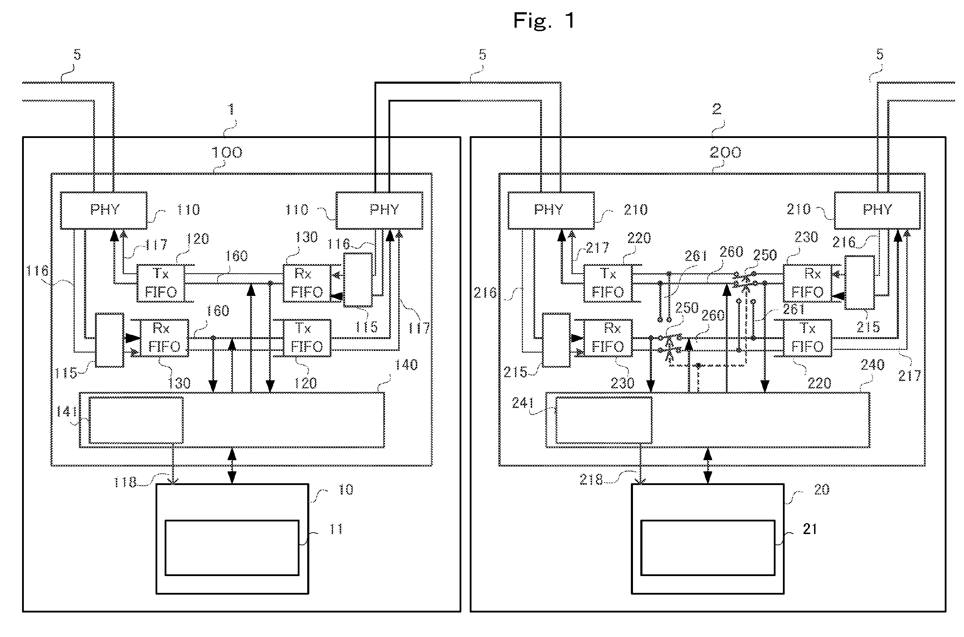

Fig. 1 is a block diagram showing the configuration of communication devices of the present invention.
In Fig. 1, a first communication device 1 and a second communication device 2 are connected in series using a transmission path 5. The first communication device 1 includes an in-device reference timer 141, which is disposed in a LINK section 140, for managing a reference time of the communication system, and the second communication device 2 includes an in-device reference timer 241, which is disposed in a LINK section 240, for performing synchronization with the reference time of the communication system.
The reference time is used as a basis for the synchronized communication system to start its operation and the like. The reference time is contained in a synchronization frame at the beginning of each communication cycle, and is sent to each second communication device from the first communication device.
For example, each second communication device decrements its reference time, and outputs an interrupt signal when the value of the reference time becomes a preset interrupt output time. With the use of the interrupt signals, the synchronized communication system can allow all the devices to start processes at the same timing. While in the present example, an in-device reference timer is mounted inside a LINK section, a dedicated timer may be mounted outside a LINK section.
The first communication device 1 includes a communication control section 100 that controls transmission/reception data, and a host CPU section 10 that executes a calculation process based on data received by the communication control section 100 to create transmission data.
The host CPU section 10 includes a connected-device information storage section 11 that stores information about other communication devices connected to the transmission path.
The communication control section 100 includes PHY sections (also referred to as first layers or physical layers) 110 that are connected to the transmission path and that convert a logic signal into an electrical signal in order to deliver data to the transmission path, a LINK section 140 that performs data transmission/reception with the PHY sections 110, Rx FIFO sections 130 that hold data received by the PHY sections 110, and Tx FIFO sections 120 that hold transmission data from the LINK section 140 and the Rx FIFO sections 130. As shown in Fig. 1, the two PHY sections 110, the two Rx FIFO sections 130, and the two Tx FIFO sections 120 constitute two relay paths 160 over which data received by one of the PHY sections 110 is transferred to the other PHY section 110.
That is, the relay paths 160 allow data received by one of the PHY sections 110 to be directly transferred to another communication device from the other PHY section. Further, SFD detection sections 115 are provided between the PHY sections 110 and the Rx FIFO sections 130, and monitor the SFD that follows the preamble of received data. The SFD is a 1-byte frame start flag, which is expressed as '5D' in hexadecimal.
Upon correct detection of the SFD, each of the SFD detection sections 115 immediately outputs a reception signal 116 output from the PHY section 110 to the other PHY section 110 as a transfer permission signal 117 through the Rx FIFO 130 and the Tx FIFO 120, and also transfers the received data to the Tx FIFO 120 through the Rx FIFO 130.

Upon receipt of this transfer permission signal, the PHY section 110 immediately transfers the reception data, which has been transferred from the Tx FIFO 120, to the transmission path 5.

This transfer permission signal and the reception data are not output to the Rx FIFO 130 when the transfer of the current frame is completed or when the current frame is interrupted due to a transmission error or the like. That is, the transfer of received data from the PHY sections 110 to the transmission path 5 is kept stopped until the next time the SFD is correctly detected.

Note that the PHY sections are not limited to those configured to perform conversion between a logic signal and an electrical signal, but may be configured to perform conversion between a logic signal and an optical signal or perform conversion between a logic signal and a radio signal.

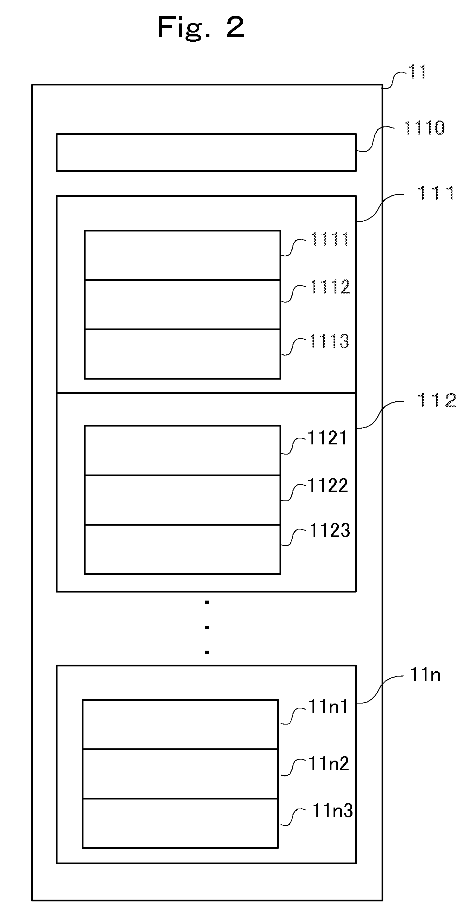

Fig. 2 shows an example configuration of the connected-device information storage section 11 of the first communication device 1 shown in Fig. 1.

The connected-device information storage section 11 includes a connectable-number storage area 1110 that stores a number (in Fig. 2, n) representing the number of one or more connectable second communication devices #1, #2, ... #n that are connected to the first communication device 1, and second-communication-device information storage sections 111, 112, ... 11n that store information about the number n of connectable second communication devices.

The information storage section 111, 112, ... 11n further include address storage areas 1111, 1121, ... 11n1 for the individual communication devices, transmission-path delay measurement completion/failure information storage areas 1112, 1122, ... 11n2, and transmission path delay time storage areas 1113, 1123, ... 11n3 obtained as a result of transmission path delay measurement.

Note that the number of connectable second communication devices is the number of second communication devices necessary for an application system to be realized, and is written in advance in the connectable-number storage area 1110 using an engineering tool or the like (not shown). Similarly, the addresses for specifying the second communication devices are also written in advance in the address storage areas 1111, 1121, ... 11n1.

Now referring back to Fig. 1, the second communication device 2 includes a communication control section 200 that controls transmission/reception data, and a host CPU section 20 that executes a calculation process based on data received by the communication control section 200 to create transmission data.

Further, the host CPU section 20 includes a local information storage section 21 that stores local information. Further, the communication control section 200 includes PHY sections 210 that are connected to the transmission path and that convert a logic signal into an actual electrical signal, a LINK section 240 that performs data transmission/reception with the PHY sections 210, Rx FIFO sections 230 that hold data received by the PHY sections 210, and Tx FIFO sections 220 that hold transmission data from the LINK section 240 and the Rx FIFO sections 230. The two PHY sections 210, the two Rx FIFO sections 230, and the two Tx FIFO sections 220 constitute two relay paths 260 over which data received by one of the PHY sections 210 is transferred to the other PHY section 210 when path selection switches 250 are connected to the relay paths 260.

On the other hand, when the path selection switches 250 are connected to return paths 261, a transfer path over which data received by one of the PHY sections 210 is returned to the same PHY section 210 is formed. As described below, the return paths 261 are used for measuring a transmission path delay time from the first communication device to this second communication device. Further, the path selection switches 250 are configured to connect the path for reception data and the path for a transfer permission signal, which will be described below, to the relay paths 260 or the return paths 261 at the same timing.

When the path selection switches 250 are connected to the relay paths 260 in the normal operation, each of the two relay paths includes one Rx FIFO 230 and one Tx FIFO 220.

Also when the path selection switches 250 are connected to the return paths 261, each of the two relay paths includes one Rx FIFO 230 and one Tx FIFO 220.

In either case, data to be transferred is allowed to pass through one Rx FIFO 230 and one Tx FIFO 220. Further, SFD detection sections 215 are located between the PHY sections 210 and the Rx FIFO sections 230, and monitor the SFD that follows the preamble of received data.

Upon correct detection of the SFD, each of the SFD detection sections 215 immediately outputs a reception signal 216 output from the PHY section 210 to the other PHY section 210 as a transfer permission signal 217 through the Rx FIFO 230 and the Tx FIFO 220, and also transfers the received data to the Tx FIFO 220 through the Rx FIFO 230.

Upon receipt of this transfer permission signal, the PHY section 210 immediately transfers the reception data, which has been transferred from the Tx FIFO 220, to the transmission path 5.

This transfer permission signal and the reception data are not output to the Rx FIFO 230 when the transfer of the current frame is completed or when the current frame is interrupted due to a transmission error or the like. That is, the transfer of received data from the PHY sections 210 to the transmission path 5 is kept stopped until the next time the SFD is correctly detected.

Note that in Fig. 1, only the second communication device 2 has the path selection switches 250 mounted therein. However, it goes without saying that the first communication device 1 may also have the path selection switches 250 mounted therein so that both can have the same circuit configuration.

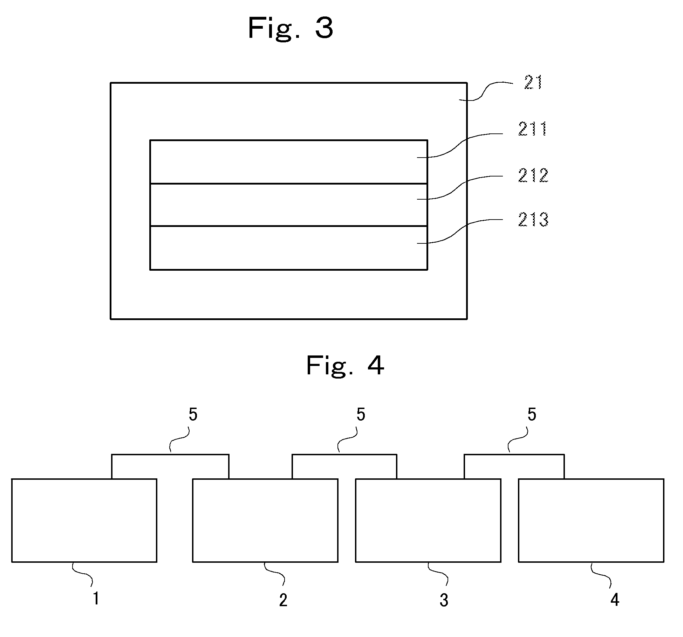

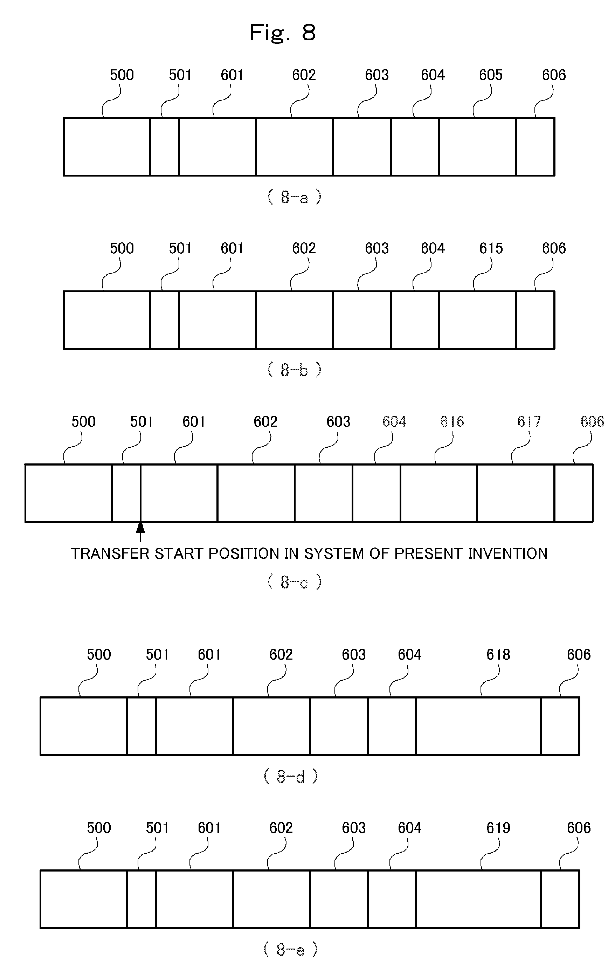

Fig. 3 shows an example configuration of the local information storage section 21 in Fig. 1. The local information storage section 21 includes a number-of-times-of-delay-measurement storage area 211 for storing the number of times of delay measurement 605 (Fig. 8-a) contained in a synchronization-correction-target specifying frame sent thereto, a transmission path delay time storage area 212 for storing a transmission path delay time 615 (Fig. 8-b) contained in a transmission path delay measurement frame, and a reference time storage area 213 that is an area for storing a current reference time value 616 (Fig. 8-c) contained in a synchronization frame.

Fig. 4 shows an example of a communication system to which the present invention is applied.

In the present example, four communication devices are connected in series to a transmission path. A first communication device 1 manages a reference time. Each of second communication devices #1 to #3 (2 to 4) has a configuration similar to that shown in the block diagram of the second communication device 2 in Fig. 1, and is synchronized with the reference time of the first communication device 1.

In the present example, the first communication device 1 is connected in such a manner that the first communication device 1 is at the end of the transmission path. However, as explained using Fig. 1, the first communication device 1 also has a relay function mounted therein. Thus, the first communication device 1 may be connected in the middle of the transmission path.

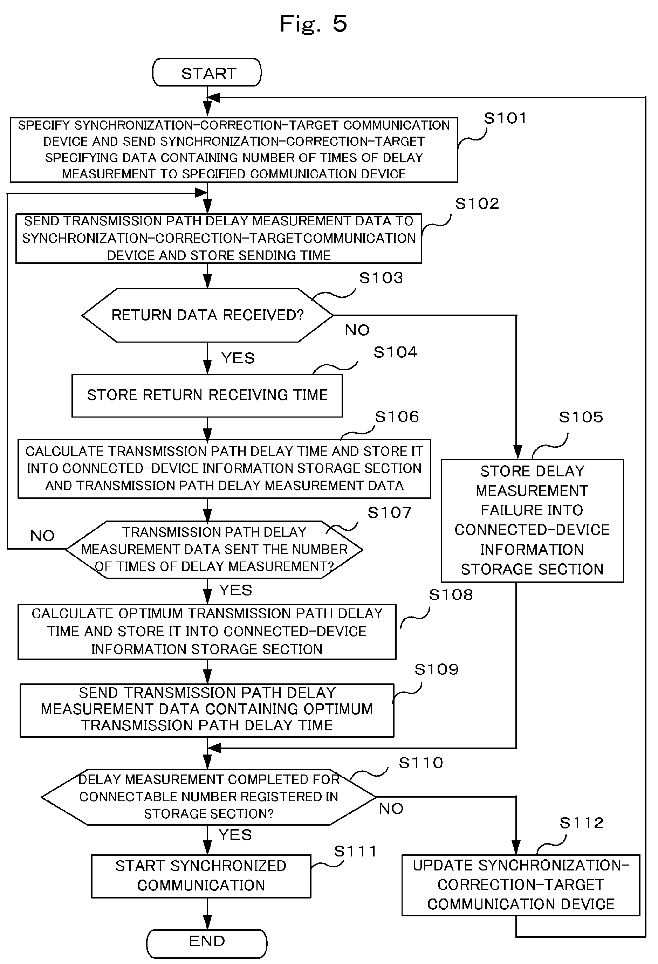

Fig. 5 is a flowchart of the first communication device, showing a procedure for measuring a transmission path delay time of the present invention, and the procedure is executed by the host CPU 10. This flowchart is a diagram before the start of fixed cycle communication, and a flowchart after the start of fixed cycle communication will be described below.

In step S101, the first communication device 1 (Fig. 1) specifies one of the second communication devices #1 to #n stored in advance in the connected-device information storage section 11 (Fig. 2) as a synchronization-correction-target communication device (hereinafter referred to as a "target communication device"), and sends a synchronization-correction-target specifying frame (Fig. 8-a) containing the number of times of delay measurement to the specified second communication device.

Then, in step S102, a transmission path delay measurement frame (Fig. 8-b) is sent to the target communication device, and the time of sending the transmission path delay measurement frame is stored.

Then, when the transmission path delay measurement frame returned from the target communication device is received in step S103, the process proceeds to step S104. Otherwise, the process proceeds to step S105 in which the delay measurement failure is stored in the connected-device information storage section 11. Then, the process proceeds to step S110.

The failure of delay measurement means that, for example, a transmission path delay measurement frame has been sent to a second communication device that should be present according to the determination based on the connectable-number storage area 1110 shown in Fig. 2, but no return data has been successfully received. The determination of failure of receipt is performed based on the time up of a timer (not shown) or the like.

When the transmission path delay measurement frame returned from the target communication device has been received, in step S104, the return receiving time is stored. Then, in step S106, a transmission path delay time is calculated from the time of sending the transmission path delay measurement frame and the return receiving time, and is stored in the corresponding one of the transmission path delay time storage areas 1113 to 11n3 located in the information storage section for this target communication device in the connected-device information storage section 11.

Here, a method for calculating a transmission path delay time will be explained. As illustrated in the block diagram of the second communication device 2 in Fig. 1, both in a case where the path selection switches 250 are set to the relay paths 260 in the normal operation and in a case where the path selection switches 250 are set to the return paths 261 for synchronization delay measurement, data to be transferred passes through one SFD detection section, one Rx FIFO, and one Tx FIFO, and the Rx FIFO section immediately transfers the received data to the Tx FIFO section so that the Tx FIFO section immediately sends the data to the transmission path. Thus, it can be regarded that there is no difference between the delay times for outgoing and incoming communications.

Therefore, if the time of sending the transmission path delay measurement frame is represented by Ts and the time of receiving the returned data is represented by Tr, the transmission path delay time of the transmission path can be calculated by $(Tr - Ts)/2$.

Then, in step S107, it is checked whether the transmission path delay measurement frame has been sent a number of times corresponding to the number of times of delay measurement. If the transmission path delay measurement frame has not been sent the required number of times, the processing of steps S102 to S106 is repeated. If the transmission path delay measurement frame has been sent the required number of times, in step S108, an optimum transmission path delay time such as, for example, the average value is calculated and stored in the corresponding one of the transmission path delay time storage areas 1113 to 11n3 located in the information storage section for this target communication device in the connected-device information storage section 11. In step S109, a transmission path delay measurement frame (Fig. 8-b) containing the optimum transmission path delay time in the transmission path delay time 615 is sent to the target second communication device.

In step S110, it is checked whether transmission path delay measurement has been completed for a number of second communication devices corresponding to the connectable number stored in the connected-device information storage section 11. If the transmission path delay measurement has not been completed, in step S112, the target communication device is updated. Then, the process proceeds to step S101, and the subsequent processing of steps S101 to S110 is repeated. When the transmission path delay measurement has been completed, in step S111, a synchronization frame (Fig. 8-c) is sent to all the second communication devices.

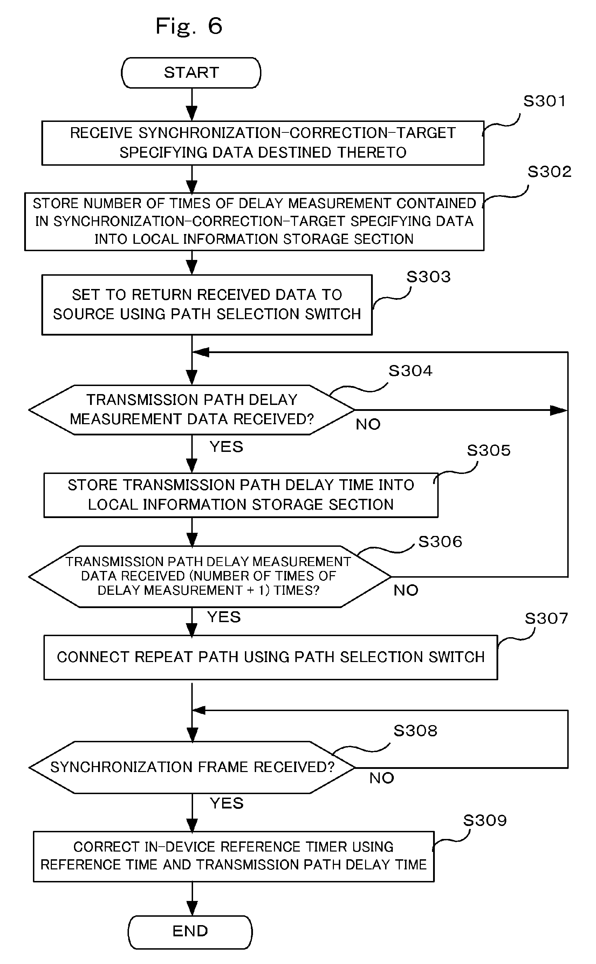

Fig. 6 is a flowchart showing a procedure for a process performed by a second communication device in the measurement of a transmission path delay time of the present invention, and the procedure is executed by the host CPU 20.

In step S301, the second communication device 2 (Fig. 1) receives a synchronization-correction-target specifying frame sent thereto. In step S302, the number of times of delay measurement contained in the received synchronization-correction-target specifying frame is stored in the number-of-times-of-delay-measurement storage area 211 (Fig. 3) of the local information storage section 21. In step S303, the setting to the return paths 261 (Fig. 1) is performed using the path selection switches 250 (Fig. 1).

In step S304, the reception of a transmission path delay measurement frame is waited. When a transmission path delay measurement frame is received, in step S305, the transmission path delay time 615 contained in the transmission path delay measurement frame (Fig. 8-b) is stored in the transmission path delay time storage area 212 (Fig. 3) of the local information storage section 21. Since the transmission path delay time is overwritten, the last received value is active.

Then, in step S306, it is checked whether the transmission path delay measurement frame (Fig. 8-b) has been received (the number of times of delay measurement + 1) times. When the transmission path delay measurement frame has not been received (the number of times of delay measurement + 1) times, the process returns to step S304. When the transmission path delay measurement frame has been received (the number of times of delay measurement + 1) times, the process proceeds to step S307, and the path selection switches 250 (Fig. 1) are connected to the relay paths 260 (Fig. 1) so that the configuration for normal operation is set.

Then, in step S308, the reception of a synchronization frame (Fig. 8-c) is waited. Finally, in step S309, the in-device reference timer 241 (Fig. 1) is corrected using the reference time contained in the received synchronization frame and the transmission path delay time.

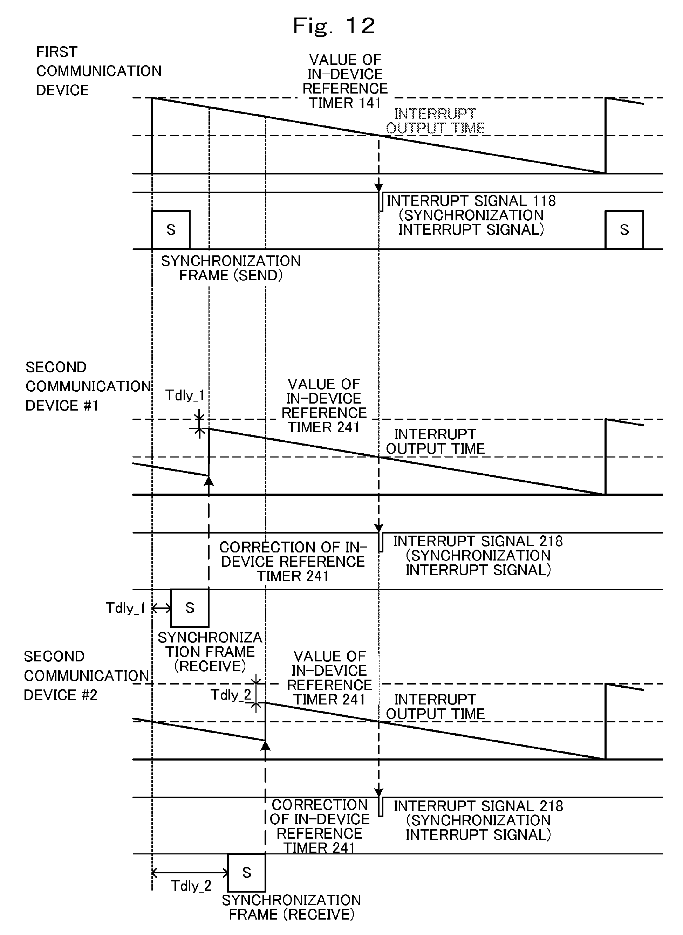

This correction is performed by, for example, as in an exemplary embodiment shown in Fig. 12, the in-device reference timer 241 is updated to a value obtained by subtracting the transmission path delay time from the reference time. Also, when this in-device reference timer is an up counter, an update to a value obtained by adding the transmission path delay time to the reference time is made.

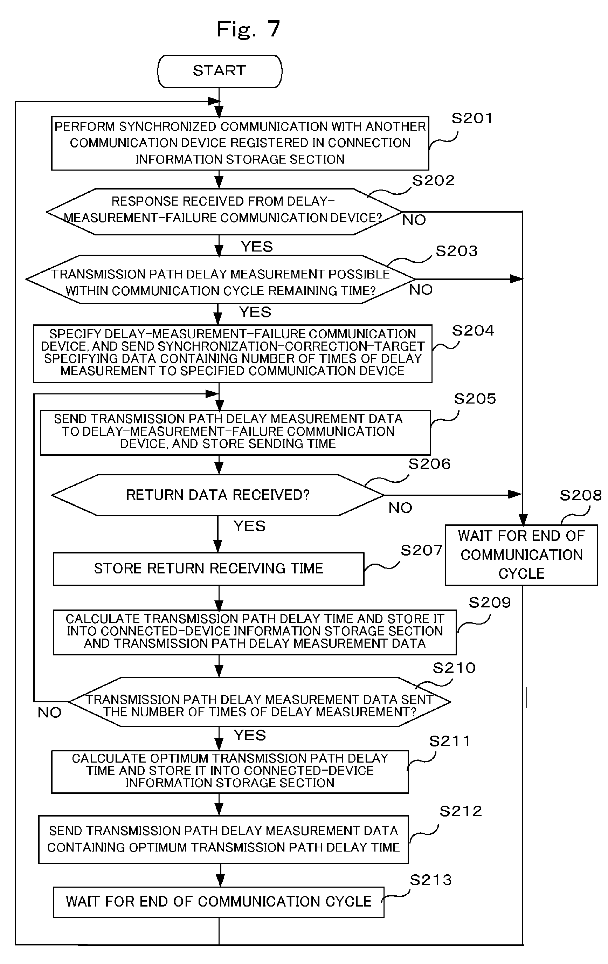

Fig. 7 shows a procedure for measuring a transmission path delay time when a new second communication device 2 (Fig. 1) is connected in a case where the first communication device 1 (Fig. 1) starts synchronized communication in a constant communication cycle in a state where a number of second communication devices corresponding to the connectable number 1110 (Fig. 2) in the connection information storage section 11 are not connected. The process based on this procedure is executed by the host CPU 10.

The term synchronized communication is communication that is performed in a predetermined constant communication cycle between a first communication device and second communication devices after the first communication device sets a transmission path delay time in each of the second communication devices and sends a synchronization frame once.

In this synchronized communication, the first communication device performs communication in a constant communication cycle, such as sending a synchronization frame to each second communication device, sending a command frame, and receiving a response frame from each second communication device.

In a state where synchronized communication has been started, at the time of the start of a communication cycle, in step S201, the first communication device 1 starts synchronized communication with all the second communication devices #1 to #n (Fig. 2) (the number of which corresponds to that stored in the connectable number 1110) stored in the connected-device information storage section 11.

After the completion of the synchronized communication, in step S202, it is checked whether a response has been received from any of the second communication devices for which delay measurement failure has been recorded in the connected-device information storage section 11. If no response has been received, the process proceeds to step S208 in which the end of the communication cycle is waited. Then, the process proceeds to step S201.

If a response has been received, the process proceeds to step S203 in which the remaining time of the communication cycle is compared with the time required for transmission path delay measurement to check whether the transmission path delay measurement can be completed within the remaining time of the communication cycle.

At this time, the transmission path delay measurement time has a value that is determined by the equation given in Eq. 1 using a maximum value Tmax_dly of the transmission path delay times stored in the connected-device information storage section 11 (the transmission path delay time to the second communication device that is the most far from the first communication device), the number of times Ncnt delay measurement is performed, and a relay time Trpt in a communication device determined by circuit configuration.

$$\text{Transmission path delay measurement time} =$$
$$(2 \times \text{Tmax\_dly} + \text{Trpt}) \times (\text{Ncnt} + 1) + \alpha \ldots \text{(Eq. 1)}$$

Note that Eq. 1 is used for a new second communication device connected to a second communication device for which the measurement of transmission path delay time has already been completed and that is connected at the most far position from the first communication device. Further, $\alpha$ denotes the time that is required for the process in the flowchart shown in Fig. 7 in the first communication device and that does not result from Tmax_dly or Trpt, which means, for example, the time required for calculating the average value or the like.

When it is determined in S203 that the transmission path delay measurement cannot be completed, the process proceeds to step S208. When it is determined in S203 that the transmission path delay measurement can be completed, the process proceeds to step S204. Note that in S208, the impossibility of measurement of a transmission path delay time can also be displayed on a display or the like (not shown).

In step S204, a synchronization-correction-target specifying frame (Fig. 8-a) containing the number of times of delay measurement 605 is sent to a second communication device from which a response has been received and for which delay measurement failure has been recorded (hereinafter referred to as a "target communication device").

Then, in step S205, a transmission path delay measurement frame (Fig. 8-b) is sent to the target communication device, and the time of sending the transmission path delay measurement frame is stored.

Then, when the transmission path delay measurement frame returned from the target communication device is received in step S206, the process proceeds to step S207. Otherwise, the process proceeds to step S208.

When the transmission path delay measurement frame returned from the target communication device has been received, in step S207, the time of receiving the returned data is stored. Then, in step S209, a transmission path delay time is calculated from the time of sending the transmission path delay measurement frame and the time of receiving the returned data, and is stored in the corresponding one of the transmission path delay time storage areas 1113 to 11n3 located in the information storage section for this target communication device in the connected-device information storage section 11. The method for calculating a transmission path delay time is similar to that in the case of Fig. 5.

As illustrated in the block diagram of the second communication device in Fig. 1, both in a case where the path selection switches 250 are set to the relay paths 260 in the normal operation and in a case where the path selection switches 250 are set to the return paths 261 for synchronization delay measurement, data passes through one Rx FIFO and one Tx FIFO, and the Rx FIFO section immediately transfers the received data to the Tx FIFO section so that the Tx FIFO section immediately sends the data to the transmission path. Thus, it can be regarded that there is no difference between the delay times for outgoing and incoming communications.

Therefore, if the time of sending the transmission path delay measurement frame is represented by Ts and the time of receiving the transmission path delay measurement frame is represented by Tr, the transmission path delay time of the transmission path can be calculated by (Tr - Ts)/2.

Then, in step S210, it is checked whether the transmission path delay measurement frame has been sent a number of times corresponding to the number of times of delay measurement. If the transmission path delay measurement frame has not been sent the required number of times, the processing of steps S205 to S209 is repeated. If the transmission path delay measurement frame has been sent the required number of times, in step S211, an optimum transmission path delay time such as, for example, the average value is calculated and stored in the corresponding one of the transmission path delay time storage areas 1113 to 11n3 located in the information storage section for this target communication device in the connected-device information storage section 11. In step S212, a transmission path delay measurement frame (Fig. 8-b) containing the optimum transmission path delay time in the transmission path delay time 615 is sent to the target second target communication device. In step S213, the end of the communication cycle is waited. Then, the process returns to step S201. The above steps are repeated.

Note that if it is checked in step S202 whether or not response data included in the received response frame is response data from a second communication device for which consecutive synchronized communication errors have occurred, a transmission path delay time for a second communication device that is disconnected and reconnected during synchronized communication can also be measured using a procedure similar to that shown in Fig. 7.

Fig. 8 shows an example of a synchronization-correction-target specifying frame (Fig. 8-a), a transmission path delay measurement frame (Fig. 8-b), a synchronization frame (Fig. 8-c), a command frame (Fig. 8-d), and a response frame (Fig. 8-e) which are sent or received by the first communication device 1 (Fig. 1).

The five pieces of data commonly have, in addition to a preamble 500, an SFD (Start Frame Delimiter) 501, a destination address 601, a source address 602, a data type 603, and a data length 604, an FCS (Flame Check Sequence) 606 for detecting an error of transmission data. In the present example, the five pieces of data are identified using the data type 603.

Note that data is not limited to these five types, and a frame having a different configuration can be added, as necessary, in accordance with necessity such as an application.

Fig. 8-a shows an example of a synchronization-correction-target specifying frame which is sent from the first communication device to a second communication device for which the delay time is to be measured (synchronization-correction-target communication device). The destination address 601 contains addresses unique to synchronization-correction-target communication devices. The addresses are stored in the information storage sections 111 to 11n (Fig. 2) for the second communication devices 1 to n in the connected-device information storage section 11.

Fig. 8-b shows an example of a transmission path delay measurement frame which is sent from the first communication device to a synchronization-correction-target communication device. A transmission path delay time 615 contains 0 at the time of the first transmission and contains a result of the (m-1)-th measurement at the time of the m-th transmission before the transmission path delay measurement frame is sent to the synchronization-correction-target communication device. After measurement has been performed a number of times corresponding to a preset number of times of delay measurement, the first communication device calculates an optimum transmission path delay time such as a maximum value of these measurement results, the average value, or a value obtained by adding an extra time to the average value, and contains the optimum transmission path delay time in the transmission path delay time 615. The resulting transmission path delay measurement frame is sent to the synchronization-correction-target communication device.

Fig. 8-c shows an example configuration of a synchronization frame which is used in the present invention. A current reference time value 616 contains the value of the in-device reference timer 141 (Fig. 1) that is obtained when a synchronization frame is sent. An interrupt output time 617 is used for setting a timing at which each second communication device outputs an interrupt signal to the host CPU 20 (Fig. 1), and is written by the host CPU 10 (Fig. 1) through the LINK 140 (Fig. 1).

The interrupt output time is set to, for example, a timing at which the second communication device that is the most far from the first communication device receives a command frame and starts a process for command data included in the command frame.

Alternatively, the interrupt output time may be set to a timing at which the second communication device that last received a command frame sent from the first communication device to all second communication devices can start a process for command data included in the command frame.

Fig. 8-d shows a command frame which is sent from the first communication device to a second communication device. In general, the second communication device starts a process for command data 618 in synchronization with an interrupt signal output at the interrupt output time.

Fig. 8-e shows a response frame which is received by the first communication device from a second communication device. In general, the second communication device sends this response frame after receiving a command frame from the first communication device.

Fig. 12 shows an example showing the synchronization between the in-device reference timers 141 and 241 (Fig. 1) incorporated respectively in the first communication device and one or more second communication devices that constitute a communication system. When a synchronization frame S is sent from the first communication device, the second communication device #1 first receives this frame.

Upon receipt of this frame, the second communication device #1 updates the in-device reference timer 241 using a value obtained by subtracting a transmission path delay time Tdly_1 from the first communication device to the second communication device #1, which is measured in advance, from the current reference time value 616 (Fig. 8-c) contained in the synchronization frame so that the value of the in-device reference timer 241 can become equal to the current value of the in-device reference timer 141 in the first communication device. Subsequently, upon receipt of this synchronization frame, the second communication device #2 also updates the in-device reference timer 241 using a transmission path delay time Tdly 2 from the first communication device 1 to the second communication device #2, which is measured in advance, and the current reference time value 616.

Accordingly, the in-device reference timer 141 in the first communication device and the in-device reference timers 241 in the second communication devices #1 and #2 are timed. Further, an interrupt signal is output when a match occurs between the value of the interrupt output time 617 contained in the synchronization frame and the values of the in-device reference timers 241 in the second communication devices #1 and #2. Thus, each communication device can output an interrupt for each communication synchronization to a host CPU at the same time.

Note that although an in-device reference timer of each communication device operates based on a separate clock (not shown), the difference in frequency between the individual clocks may be negligible because it is much smaller than that between the reference times corrected in each communication cycle.

According to the present invention, therefore, even when all communication devices are connected in series to a transmission path, the process for command data given in the same communication cycle can be started at the same interrupt timing. In addition, the communication cycle can be reduced.

Therefore, a contribution to improvement of control performance of a motion control system including a plurality of servo amplifiers, relays, sensors, and the like as second communication devices can be made.

**Claims**

1. A synchronized communication system comprising a first communication device (1) and one or more second communication devices (#1, #2, --- #n) that perform communication in a predetermined communication cycle and respectively comprise first and second PHY sections (110, 210) configured to convert a logic signal into an electrical signal and a link section (140, 240),
   wherein the second PHY section of each communication device is connected to the first PHY section of another communication device, **characterized in that**:

   the first PHY section (110, 210) is configured to connect, respectively, to the second PHY section (110, 210) by a first relay path (160, 260) via a first reception first-in first-out (Rx FIFO) section (130, 230) for receiving data from the first PHY section (110, 210) and a first transmission first-in first-out (Tx FIFO) section (120, 220) for outputting the received data to the second PHY sections (110, 210), whereas the second PHY section (110, 210) is configured to connect, respectively to the first PHY section (110, 210) by a second relay path (160, 260) via a second reception first-in first-out (Rx FIFO) section (130, 230) that receives data from the second PHY section (110, 210) and a second transmission first-in first-out (Tx FIFO) section (120, 220) that outputs the received data to the first PHY sections (110, 210);
   each of the link sections (140, 240) is connected to the corresponding first and second relay paths (160, 260) and has an in-device reference timer (141, 241) for generating an interrupt signal at a preset timing;
   the link section (140) of the first communication device (1) is configured to send a synchronization-correction-target specifying frame, a transmission path delay measurement frame and a synchronization frame;
   each of the first and second relay paths (260) of the one or more second communication devices (#1, #2, --- #n) is inserted with a path selection switch (250) and connected to one end of a return path (261) respectively, the path selection switches (250) being connected to the other end of the return path (261) when the path selection switch (250) disconnects the corresponding first or second relay path (260), operation of the path selection switches (250) being performed at the same time; wherein
   the first communication device (1) separately measures transmission path delay times (615) to the one or more second communication devices (#1, #2, ---#n), separately notifies the devices (#1, #2, --- #n) of the corresponding transmission path delay time (615), and sends a current reference time value (616) in the communication system for each communication cycle; and
   each of the one or more second communication devices (#1, #2, --- #n) is configured to correct the received current reference time value (616) using the notified corresponding transmission path delay time (615) and set the corrected value in the in-device reference timer (141, 241) thereof.

2. The synchronized communication system according to claim 1, wherein the first communication device (1) is configured to store an interrupt output time (617) in the synchronization frame (8-c) and send the synchronization frame (8-c) to the one or more second communication device (#1. #2, --- #n), and each of the one or more second communication devices (#1, #2, --- #n) is configured to set the received interrupt output time (617) in the in-device reference timer (241) and output a synchronization interrupt signal when a value of the timer has reached the interrupt output time (617).

3. The synchronized communication system according to claim 1 ar 2, wherein after the first communication device (1) starts synchronized communication with a constant communication cycle including sending a synchronization frame (8-c) and a command frame (8-d) to the one or more second communication devices (#1, #2, --- #n) and receiving response frames (8-e) from the one or more second communication devices (#1, #2, --- #n), when the first communication device (1) detects the one or more second communication vices (#1, #2, --- #n) that has been newly connected to the synchronized communication system de during the synchronized communication with the one or more second communication devices (#1, #2, --- #n), the first communication device (1) is configured to measure a transmission path delay time (615) to the one or more second communication devices (#1, #2, --- #n) and notify the one or more second communication devices (#1, #2, --- #n) of the transmission path delay time (615) within a time that remains after predetermined communication has been performed in the communication cycle.

4. A first communication device (1) performing communication in a predetermined communication cycle and comprising first and second PHY sections (110) configured to convert a logic signal into an electrical signal and a link section (140), wherein the second PHY section of each communication device is connected to the first PHY section of another communication device, **characterized in that**:

the first PHY section (110) is configured to connect to the second PHY section (110) by a first relay path (160) via a first reception first-in first-out (Rx FIFO) section (130) for receiving data from the first PHY section (110) and a first transmission first-in first-out (Tx FIFO) section (120) for outputting the received data to the second PHY sections (110), whereas the second PHY section (110) is configured to connect, respectively to the first PHY section (110) by a second relay path (160) via a second reception first-in first-out (Rx FIFO) section (130) that receives data from the second PHY section (110) and a second transmission first-in first-out (Tx FIFO) section (120) that outputs the received data to the first PHY sections (110);

the link section (140) is connected to the first and second relay paths (160) and has an in-device reference timer (141) for generating an interrupt signal at a preset timing;

the link section (140) of the first communication device (1) is configured to send a synchronization-correction-target specifying frame, a transmission path delay measurement frame and a synchronization frame; wherein the first communication device (1) separately measures transmission path delay times (615) to be sent to one or more second communication devices (#1, #2, --- #n), separately notifies of the corresponding transmission path delay time (615), and sends a current reference time value (616) in the communication system for each communication cycle.

5. The first communication device (1) according to claim 4, wherein each of the Rx FIFO sections (130) includes an SFD (frame start signal) detection section (115) disposed upstream thereof, and upon detection of an SFD that follows a preamble in data received by one of the PHY sections (110), a corresponding one of the SFD detection sections (115) immediately transfers the received data to the transmission path from the other PHY section (110).

6. One or more second communication devices (#1, #2, --- #n) performing communication in a predetermined communication cycle and comprising first and second PHY sections (210) configured to convert a logic signal into an electrical signal and a link section (240),

wherein the second PHY section of each communication device is connected to the first PHY section of another communication device, **characterized in that**:

the first PHY section (210) is configured to connect to the second PHY section (210) by a first relay path (260) via a first reception first-in first-out (Rx FIFO) section (230) for receiving data from the first PHY section (210) and a first transmission first-in first-out (Tx FIFO) section (220) for outputting the received data to the second PHY sections (210), whereas the second PHY section (210) is configured to connect, respectively to the first PHY section (210) by a second relay path (260) via a second reception first-in first-out (Rx FIFO) section (230) that receives data from the second PHY section (210) and a second transmission first-in first-out (Tx FIFO) section (220) that outputs the received data to the first PHY sections (210);

the link section (240) is connected to the corresponding first and second relay paths (260) and has an in-device reference timer (241) for generating an interrupt signal at a preset timing;

each of the first and second relay paths (260) of the one or more second communication devices (#1, #2, --- #n) is inserted with a path selection switch (250) and connected to one end of a return path (261) respectively, the path selection switches (250) being connected to the other end of the return path (261) when the path selection switch (250) disconnects the corresponding first or second relay path (260), operation of the path selection switches (250) being performed at the same time; wherein

when a current reference time value (616) is notified, each of the one or more second communication devices (#1, #2, --- #n) is configured to correct the received current reference time value (616) using the notified corresponding transmission path delay time (615) and set the corrected value in the in-device reference timer (141, 241) thereof.

7. The one or more second communication devices (#1, #2, --- #n) according to claim 6, wherein each of the Rx FIFO section (230) includes an SFD (frame start signal) detection section (215) disposed upstream thereof, and upon detection of an SFD that follows a preamble in data received by one of the PHY sections (210), a corresponding one of the SFD detection sections (215) immediately transfers the received data to the transmission path from the other PHY section (210).

8.  A synchronized communication method using a synchronized communication system comprising a first communication device (1) and one or more second communication devices (#1, #2, --- #n) that perform communication in a predetermined communication cycle and respectively comprise first and second PHY sections (110, 210) configured to convert a logic signal into an electrical signal and a link section (140, 240),
    wherein the second PHY section of each communication device is connected to the first PHY section of another communication device, **characterized in that**:

    the first PHY section (110, 210) is configured to connect, respectively, to the second PHY section (110, 210) by a first relay path (160, 260) via a first reception first-in first-out (Rx FIFO) section (130, 230) for receiving data from the first PHY section (110, 210) and a first transmission first-in first-out (Tx FIFO) section (120, 220) for outputting the received data to the second PHY sections (110, 210), whereas the second PHY section (110, 210) is configured to connect, respectively to the first PHY section (110, 210) by a second relay path (160, 260) via a second reception first-in first-out (Rx FIFO) section (130, 230) that receives data from the second PHY section (110, 210) and a second transmission first-in first-out (Tx FIFO) section (120, 220) that outputs the received data to the first PHY sections (110, 210);
    each of the link sections (140, 240) is connected to the corresponding first and second relay paths (160, 260) and has an in-device reference timer (141, 241) for generating an interrupt signal at a preset timing; each of the first and second relay paths (260) of the one or more second communication devices (#1, #2, --- #n) is inserted with a path selection switch (250) and connected to one end of a return path (261) respectively, the path selection switches (250) being connected to the other end of the return path (261) when the path selection switch (250) disconnects the corresponding first or second relay path (260), operation of the path selection switches (250) being performed at the same time; the method comprising the steps of:

    - sending a synchronization-correction-target specifying frame, a transmission path delay measurement frame and a synchronization frame by the link section (140) of the first communication device (1);
    - separately measuring, by the first communication device (1), transmission path delay times (615) to the one or more second communication devices (#1, #2.-- #n);
    - separately notifying the devices (#1, #2, --- #n) of the corresponding transmission path delay time (615);
    - sending a current reference time value (616) in the communication system for each communication cycle;
    - correcting, by each of the one or more second communication devices (#1, #2, --- #n), the received current reference time value (616) using the notified corresponding transmission path delay time (615); and
    - setting the corrected value in the in-device reference timer (141, 241) thereof.

9.  The synchronized communication method according to claim 8, wherein each of the communication devices (1, #1, #2, --- #n) includes a communication control section (100, 200) that controls transmission/reception data and a host CPU section (10, 20) that executes a calculation process based on data received by the communication control section (100, 200) to create transmission data, and wherein the communication devices (1, 2) perform synchronized communication, the method comprising the steps of:

    - specifying (S101) a synchronization-correction-target communication device in accordance with information about the one or more second communication devices (#1, #2, --- #n) that is stored in advance in a connected-device information storage section (11);
    - sending (S102) a transmission path delay measurement frame (8-b) to the synchronization-correction-target communication device and at the same time storing a sending time;
    - in a case of receiving return data from the synchronization-correction-target communication device, storing (S104) a receiving time, and
    - in a case of receiving no return data (S103), additionally writing (S105) delay measurement failure into the connected-device information storage section (11);
    - calculating (S106) a transmission path delay time from the sending time and the receiving time and additionally writing the transmission path delay time into the connected-device information storage section (11); and
    - notifying (S109) the synchronization-correction-target communication device of the calculated transmission path delay time,

    wherein the first communication device (1) repeats the steps on all the one or more second communication device (#1, #2, --- #n) stored in the connected-device information storage section (11) and then starts synchronized communication.

10. The synchronized communication method according to claim 8 or 9, further comprising the steps of, during the synchronized communication, after the first communication device (1) performs predetermined communication including sending a synchronization frame (8-c) and a command frame (8-d) to the one or more second communication devices (#1, #2, --- #n) and receiving response frames (8-e) from the one or more second communication device (#1, #2, --- #n):

- checking (S202) a response from the at least two second communication devices (#1, #2): for which delay measurement failure is stored in the connected-device information storage section (11);
- when no response is received, waiting (S208) for the end of the communication cycle and performing (201) synchronized communication again;
- when a response is received, calculating a transmission path delay measurement time and checking (S203) whether transmission path delay measurement is possible within a remaining time in the communication cycle;
- when transmission path delay measurement is not possible within the remaining time, waiting (S208) for the end of the communication cycle and performing (S201) synchronized communication again;
- when transmission path delay measurement is possible within the remaining time, specifying (S204) a synchronization-correction-target communication device;
- sending (S205) a transmission path delay measurement frame (8-b) to the synchronization-correction-target communication device and at the same time storing a sending time;
- in a case of receiving return data from the synchronization-correction-target communication device, storing (S207) a receiving time, and in a case of receiving no return data, waiting (S208) for the end of the communication cycle and performing (S201) synchronized communications again;
- calculating (S209) a transmission path delay time from the sending time and the receiving time and additionally writing the transmission path delay time into the connected-device information storage section (11);
- notifying (S211) the synchronization-correction-target communication device of the calculated transmission path delay time; and
- waiting (S213) for the end of the communication cycle and performing synchronized communication again.

**11.** The synchronized communication method according to claim 10, wherein the transmission path delay measurement time is calculated using a maximum value of transmission path delay times (615) stored in the connected-device information storage section (11), the number of times of the delay measurement is performed, and a relay time in a communication device is determined by circuit configuration.

**12.** The synchronized communication method according to any one of claims 8 to 10, wherein each of the one or more second communication devices (#1, #2, --- #n), when specified as a synchronization-correction-target communication device by the first communication device (1), performs the steps of setting a path selection switch (250) so as to return received data to a source of the received data, connecting the path selection switch (250) to a relay destination in a case where the one or more second communication devices (#1, #2, --- #n) has received the transmission path delay measurement frame (8-b) from the first communication device (1) and has been notified of a transmission path delay time, and correcting an in-device reference timer (241) using the transmission path delay time and a reference time contained in a synchronization frame (8-c) sent from the first communication device (1), thereby performing synchronization between the reference time and the in-device reference timer (241).

**13.** The synchronized communication method according to any one of claims 8 to 10, wherein each of the one or more second communication devices (#1, #2, --- #n) stores a number of times of delay measurement performed, the number of times being contained in the synchronization-correction-target specifying frame (8-a), connects the path selection switch (250) to a relay destination after receiving a transmission path delay measurement frame (8-b) containing the number of times of delay measurement + 1 times, upon receipt of a transmission path delay measurement frame (8-b), stores a transmission path delay time (615) contained in the transmission path delay measurement frame (8-b), and corrects an in-device reference timer (241) using the transmission path delay time and a current reference time value contained in a subsequently received synchronization frame (8-c).

## Patentansprüche

**1.** Synchronisiertes Kommunikationssystem mit einer ersten Kommunikationseinrichtung (1) und einer oder mehreren zweiten Kommunikationseinrichtungen (#1, #2, --- #n), die eine Kommunikation in einem vorbestimmten Kommunikationszyklus ausführen und jeweils einen ersten und einen zweiten PHY-Abschnitt (110, 210), die ausgebildet sind, eine Logiksignal in ein elektrisches Signal umzuwandeln, und einen Verbindungsabschnitt (140, 240) aufweisen,

wobei der zweite PHY-Abschnitt jeder Kommunikationseinrichtung mit dem ersten PHY-Abschnitt einer weiteren Kommunikationseinrichtung verbunden ist, **dadurch gekennzeichnet, dass**:

der erste PHY-Abschnitt (110, 210) ausgebildet ist, sich entsprechend mit dem zweiten PHY-Abschnitt (110, 210) durch einen ersten Weiterleitungskanal (160, 260) über einen ersten Empfangs-Zuerst-Hinein-Zuerst-Heraus-(Rx FIFO) Abschnitt (130, 220) zum Empfangen von Daten aus dem ersten PHY-Abschnitt (110, 210) und einen ersten Übertragungs-Zuerst-Hinein-Zuerst-Heraus-(Tx FIFO) Abschnitt (120, 220) zur Ausgabe der empfangenen Daten an die zweiten PHY-Abschnitte (110, 210) zu verbinden, wohingegen der zweite PHY-Abschnitt (110, 210) ausgebildet ist, sich entsprechend mit dem ersten PHY-Abschnitt (110, 210) durch einen zweiten Weiterleitungskanal (160, 260) über einen ersten Empfangs-Zuerst-Hinein-Zuerst-Heraus-(Rx FIFO) Abschnitt (130, 230), der Daten aus dem zweiten PHY-Abschnitt (110, 210) empfängt, und einen zweiten Übertragungs-Zuerst-Hinein-Zuerst-Heraus-(Tx FIFO) Abschnitt (120, 220) zu verbinden, der die empfangenen Daten an die ersten PHY-Abschnitte (110, 210) ausgibt;

jeder der Verbindungsabschnitte (140, 240) mit dem entsprechenden ersten und zweiten Weiterleitungskanal (160, 260) verbunden ist und einen geräteinternen Referenzzeitgeber (141, 241) zum Erzeugen eines Interrupt-Signals an einem vorgegebenen Zeitpunkt hat;

der Verbindungsabschnitt (140) der ersten Kommunikationseinrichtung (1) ausgebildet ist, einen Synchronisations-Korrektur-Ziel-Spezifizierungsblock, einen Übertragungskanal-Verzögerungsmessblock und einen Synchronisationsblock zu senden;

jeweils der erste und der zweite Weiterleitungskanal (260) der einen oder mehreren zweiten Kommunikationseinrichtungen (#1, #2, --- #n) mit einem Kanalauswahlschalter (250) versehen und mit einem Ende eines Rückkanals (261) entsprechend verbunden sind, wobei die Kanalauswahlschalter (250) mit dem anderen Ende des Rückkanals (261) verbunden sind, wenn der Kanalauswahlschalter (250) den entsprechenden ersten oder zweiten Weiterleitungskanal (260) unterbricht, wobei das Betreiben der Kanalauswahlschalter (250) gleichzeitig ausgeführt wird; wobei

die erste Kommunikationseinrichtung (1) Übertragungskanal-Verzögerungszeiten (615) zu der einen oder den mehreren zweiten Kommunikationseinrichtungen (#1, #2,-#n) separat misst, den Einrichtungen (#1, #2, --- #n) die entsprechende Übertragungskanal-Verzögerungszeit (615) separat bekannt gibt und einen aktuellen Referenzzeitwert (616) in dem Kommunikationssystem für jeden Kommunikationszyklus sendet; und

jede der einen oder der mehreren zweiten Kommunikationseinrichtungen (#1, #2,-#n) ausgebildet ist, den empfangenen aktuellen Referenzzeitwert (616) unter Anwendung der bekannt gegebenen entsprechenden Übertragungskanal-Verzögerungszeit (615) zu korrigieren und den korrigierten Wert in ihrem geräteinternen Referenzzeitgeber (141, 241) einzustellen.

2. Synchronisiertes Kommunikationssystem nach Anspruch 1, wobei die erste Kommunikationseinrichtung (1) ausgebildet ist, eine Interrupt-Ausgabezeit (617) in dem Synchronisationsblock (8-c) zu speichern und den Synchronisationsblock (8-c) an die eine oder die mehreren zweiten Kommunikationseinrichtungen (#1, #2, --- #n) zu senden, und wobei jede der einen oder der mehreren zweiten Kommunikationseinrichtungen (#1, #2, --- #n) ausgebildet ist, die empfangene Interrupt-Ausgabezeit (617) in dem geräteinternen Referenzzeitgeber (241) einzustellen und ein Synchronisation- Interrupt-Signal auszugeben, wenn ein Wert des Zeitgebers die Interrupt-Ausgabezeit (617) erreicht hat.

3. Synchronisiertes Kommunikationssystem nach Anspruch 1 oder 2, wobei, nachdem die erste Kommunikationseinrichtung (1) eine synchronisierte Kommunikation mit einem konstanten Kommunikationszyklus beginnt, der ein Senden eines Synchronisationsblocks (8-c) und eines Befehlsblocks (8-d) zu der einen oder den mehreren zweiten Kommunikationseinrichtungen (#1, #2, --- #n) und ein Empfangen von Antwortblöcken (8-e) aus der einen oder den mehreren zweiten Kommunikationseinrichtungen (#1, #2, --- #n) umfasst, und wenn die erste Kommunikationseinrichtung (1) die eine oder die mehreren zweiten Kommunikationseinrichtungen (#1, #2, --- #n) erkennt, die neu mit dem synchronisierten Kommunikationssystem während der synchronisierten Kommunikation mit der einen oder den mehreren zweiten Kommunikationseinrichtungen (#1, #2, --- #n) verbunden worden ist, die erste Kommunikationseinrichtung (1) ausgebildet ist, eine Übertragungskanal-Verzögerungszeit (615) zu der einen oder den mehreren zweiten Kommunikationseinrichtungen (#1, #2, --- #n) zu messen und der einen oder den mehreren zweiten Kommunikationseinrichtungen (#1, #2, --- #n) die Übertragungskanal-Verzögerungszeit (615) innerhalb einer Zeit bekannt zu geben, die verbleibt, nachdem eine vorbestimmte Kommunikation in dem Kommunikationszyklus ausgeführt worden ist.

4. Erste Kommunikationseinrichtung (1) zur Ausführung einer Kommunikation in einem vorbestimmten Kommunikationszyklus, die einen ersten und einen zweiten PHY-Abschnitt (110), die ausgebildet sind, eine Logiksignal in ein elektrisches Signal umzuwandeln, und einen Verbindungsabschnitt (140) aufweist,
wobei der zweite PHY-Abschnitt jeder Kommunikationseinrichtung mit dem ersten PHY-Abschnitt einer weiteren Kommunikationseinrichtung verbunden ist, **dadurch gekennzeichnet, dass**:

der erste PHY-Abschnitt (110) ausgebildet ist, sich jeweils mit dem zweiten PHY-Abschnitt (110) durch einen ersten Weiterleitungskanal (160) über einen ersten Empfangs-Zuerst-Hinein-Zuerst-Heraus-(Rx FIFO) Abschnitt (130) zum Empfangen von Daten aus dem ersten PHY-Abschnitt (110) und einen ersten Übertragungs-Zuerst-Hinein-Zuerst-Heraus-(Tx FIFO) Abschnitt (120) zur Ausgabe der empfangenen Daten an die zweiten PHY-Abschnitte (110) zu verbinden, wohingegen der zweite PHY-Abschnitt (110) ausgebildet ist, sich entsprechend mit dem ersten PHY-Abschnitt (110) durch einen zweiten Weiterleitungskanal (160) über einen ersten Empfangs-Zuerst-Hinein-Zuerst-Heraus-(Rx FIFO) Abschnitt (130), der Daten aus dem zweiten PHY-Abschnitt (110) empfängt, und einen zweiten Übertragungs-Zuerst-Hinein-Zuerst-Heraus-(Tx FIFO) Abschnitt (120) zu verbinden, der die empfangenen Daten an die ersten PHY-Abschnitte (110) ausgibt;
der Verbindungsabschnitt (140) mit dem entsprechenden ersten und zweiten Weiterleitungskanal (160) verbunden ist und einen geräteinternen Referenzzeitgeber (141) zum Erzeugen eines Interrupt-Signals an einem vorgegebenen Zeitpunkt hat;
der Verbindungsabschnitt (140) der ersten Kommunikationseinrichtung (1) ausgebildet ist, einen Synchronisations-Korrektur-Ziel-Spezifizierungsblock, einen Übertragungskanal-Verzögerungsmessblock und einen Synchronisationsblock zu senden; wobei
die erste Kommunikationseinrichtung (1) Übertragungskanal-Verzögerungszeiten (615), die zu einer oder mehreren zweiten Kommunikationseinrichtungen (#1, #2, --- #n) zu senden sind, separat misst, die entsprechende Übertragungskanal-Verzögerungszeit (615) separat bekannt gibt und einen aktuellen Referenzzeitwert (616) in dem Kommunikationssystem für jeden Kommunikationszyklus sendet.

5. Erste Kommunikationseinrichtung (1) nach Anspruch 4, wobei jeder der Rx FIFO-Abschnitte (130) einen SFD-(Blockstartsignal-) Erfassungsabschnitt (115) aufweist, der funktionsmäßig dazu vorgeordnet angeordnet ist, und wobei bei Erfassung eines SFD, das auf eine Präambel in Daten folgt, die von einem der PHY-Abschnitte (110) empfangen werden, ein entsprechender der SFD-Erfassungsabschnitte (115) die empfangenen Daten unmittelbar an den Übertragungskanal von dem anderen PHY-Abschnitt (110) überträgt.

6. Eine oder mehrere zweite Kommunikationseinrichtungen (#1, #2, --- #n) zur Ausführung einer Kommunikation in einem vorbestimmten Kommunikationszyklus, die einen ersten und einen zweiten PHY-Abschnitt (210), die ausgebildet sind, ein Logiksignal in ein elektrisches Signal umzuwandeln, und einen Verbindungsabschnitt (240) aufweisen, wobei der zweite PHY-Abschnitt jeder Kommunikationseinrichtung mit dem ersten PHY-Abschnitt einer weiteren Kommunikationseinrichtung verbunden ist, **dadurch gekennzeichnet, dass**:

der erste PHY-Abschnitt (210) ausgebildet ist, sich mit dem zweiten PHY-Abschnitt (210) durch einen ersten Weiterleitungskanal (260) über einen ersten Empfangs-Zuerst-Hinein-Zuerst-Heraus-(Rx FIFO) Abschnitt (230) zum Empfang von Daten aus dem ersten PHY-Abschnitt (210) und einen ersten Übertragungs-Zuerst-Hinein-Zuerst-Heraus-(Tx FIFO) Abschnitt (220) zum Ausgeben der empfangenen Daten an die zweiten PHY-Abschnitte (210) zu verbinden, wohingegen der zweite PHY-Abschnitt (210) ausgebildet ist, sich entsprechend mit dem ersten PHY-Abschnitt (210) durch einen zweiten Weiterleitungskanal (260) über einen zweiten Empfangs-Zuerst-Hinein-Zuerst-Heraus-(Rx FIFO) Abschnitt (230), der Daten aus dem zweiten PHY-Abschnitt (210) empfängt, und einen zweiten Übertragungs-Zuerst-Hinein-Zuerst-Heraus-(Tx FIFO) Abschnitt (220) zu verbinden, der die empfangenen Daten an die ersten PHY-Abschnitte (210) ausgibt;
der Verbindungsabschnitt (240) mit dem jeweiligen ersten und zweiten Weiterleitungskanal (260) verbunden ist und einen geräteinternen Referenzzeitgeber (241) zur Erzeugung eines Interrupt-Signals an einem vorgegebenen Zeitpunkt hat;
der erste und der zweite Weiterleitungskanal (260) der einen oder der mehreren zweiten Kommunikationseinrichtungen (#1, #2, --- #n) jeweils darin eingefügt einen Kanalauswahlschalter (250) aufweist und mit einem Ende entsprechend mit einem Rückkanal (261) verbunden ist, die Kanalauswahlschalter (250) mit dem anderen Ende des Rückkanals (261) verbunden sind, wenn der Kanalauswahlschalter (250) den jeweiligen ersten oder zweiten Weiterleitungskanal (260) unterbricht, das Betreiben der Kanalauswahlschalter (250) gleichzeitig ausgeführt wird; wobei
wenn ein aktueller Referenzzeitwert (616) bekannt gegeben wird, jede der einen oder der mehreren zweiten Kommunikationseinrichtungen (#1, #2, --- #n) ausgebildet ist, den empfangenen aktuellen Referenzzeitwert (616) unter Verwendung der bekannt gegebenen Übertragungskanal-Verzögerungszeit (615) zu korrigieren und den korrigierten Wert in ihrem geräteinternen Referenzzeitgeber (141, 241) einzustellen.

**EP 2 139 152 B1**

**7.** Eine oder mehrere zweite Kommunikationseinrichtungen (#1, #2, --- #n) nach Anspruch 6, wobei jeder der Rx FIFO Abschnitte (230) einen SFD-(Blockstartsignal-) Erfassungsabschnitt (215) aufweist, der funktionsmäßig vorgeordnet davon angeordnet ist, und bei Erfassung eines SFD, das auf eine Präambel von Daten folgt, die von einem der PHY-Abschnitte (210) empfangen werden, ein entsprechender der SFE-Erfassungsabschnitte (215) die empfangenen Daten unmittelbar zu dem Übertragungskanal von dem anderen PHY-Abschnitt (210) überträgt.

**8.** Synchronisiertes Kommunikationsverfahren unter Anwendung eines synchronisierten Kommunikationssystems, das eine erste Kommunikationseinrichtung (1) und eine oder mehrere zweite Kommunikationseinrichtungen (#1, #2, --- #n) umfasst, die eine Kommunikation in einem vorbestimmten Kommunikationszyklus ausführen und entsprechend einen ersten und einen zweiten PHY-Abschnitt (110, 210), die zur Umwandlung eines Logiksignals in ein elektrisches Signal ausgebildet sind, und einen Verbindungsabschnitt (140, 240) aufweisen, wobei der zweite PHY-Abschnitt jeder Kommunikationseinrichtung mit dem ersten PHY-Abschnitt einer weiteren Kommunikationseinrichtung verbunden ist, **dadurch gekennzeichnet, dass**:

der erste PHY-Abschnitt (110, 210) ausgebildet ist, sich entsprechend mit dem zweiten PHY-Abschnitt (110, 210) durch einen ersten Weiterleitungskanal (160, 260) über einen ersten Empfangs-Zuerst-Hinein-Zuerst-Heraus-(Rx FIFO) Abschnitt (130, 220) zum Empfangen von Daten aus dem ersten PHY-Abschnitt (110, 210) und einen ersten Übertragungs-Zuerst-Hinein-Zuerst-Heraus-(Tx FIFO) Abschnitt (120, 220) zur Ausgabe der empfangenen Daten an die zweiten PHY-Abschnitte (110, 210) zu verbinden, wohingegen der zweite PHY-Abschnitt (110, 210) ausgebildet ist, sich entsprechend mit dem ersten PHY-Abschnitt (110, 210) durch einen zweiten Weiterleitungskanal (160, 260) über einen ersten Empfangs-Zuerst-Hinein-Zuerst-Heraus-(Rx FIFO) Abschnitt (130, 230), der Daten aus dem zweiten PHY-Abschnitt (110, 210) empfängt, und einen zweiten Übertragungs-Zuerst-Hinein-Zuerst-Heraus-(Tx FIFO) Abschnitt (120, 220) zu verbinden, der die empfangenen Daten an die ersten PHY-Abschnitte (110, 210) ausgibt;

jeder der Verbindungsabschnitte (140, 240) mit dem entsprechenden ersten und zweiten Weiterleitungskanal (160, 260) verbunden ist und einen geräteinternen Referenzzeitgeber (141, 241) zum Erzeugen eines Interrupt-Signals an einem vorgegebenen Zeitpunkt hat; jeweils der erste und der zweite Weiterleitungskanal (260) der einen oder mehreren zweiten Kommunikationseinrichtungen (#1, #2, --- #n) mit einem Kanalauswahlschalter (250) versehen und mit einem Ende eines Rückkanals (261) entsprechend verbunden sind, wobei die Kanalauswahlschalter (250) mit dem anderen Ende des Rückkanals (261) verbunden sind, wenn der Kanalauswahlschalter (250) den entsprechenden ersten oder zweiten Weiterleitungskanal (260) unterbricht, wobei das Betreiben der Kanalauswahlschalter (250) gleichzeitig ausgeführt wird;
wobei das Verfahren die Schritte umfasst:

- Senden eines Synchronisation-Korrektur-Zielspezifizierungsblocks, eines Übertragungskanal-Verzögerungsmesseblocks und eines Synchronisationsblock durch den Verbindungsabschnitt (140) der ersten Kommunikationseinrichtung (1);
- separates Messen mittels der ersten Kommunikationseinrichtung (1) von Übertragungskanal-Verzögerungszeiten (615) zu der einen oder den mehreren Kommunikationseinrichtungen (#1, #2, --- #n);
- separates Bekanntgeben der entsprechenden Übertragungskanal-Verzögerungszeit (615) an die Einrichtungen (#1, #2, --- #n);
- Senden eines aktuellen Referenzzeitwertes (616) in dem Kommunikationssystem für jeden Kommunikationszyklus;
- Korrigieren durch jede der einen oder mehreren zweiten Kommunikationseinrichtungen (#1, #2, --- #n) des empfangenen aktuellen Referenzzeitwertes (616) unter Anwendung der bekannt gegebenen entsprechenden Übertragungskanal-Verzögerungszeit (615); und
- Einstellen des korrigierten Wertes in dem geräteinternen Referenzzeitgeber (141, 241) davon.

**9.** Synchronisiertes Kommunikationsverfahren nach Anspruch 8, wobei jede der Kommunikationseinrichtungen (1, #1, #2, --- #n) einen Kommunikationssteuerungsabschnitt (100, 200), der Übertragung/Empfangen von Daten steuert, und einen Host-CPU-Abschnitt (10, 20) aufweist, der einen Berechnungsvorgang auf der Grundlage von Daten ausführt, die durch den Kommunikationssteuerungsabschnitt (100, 200) empfangen werden, um Übertragungsdaten zu erzeugen, und wobei die Kommunikationseinrichtungen (1, 2) eine synchronisierte Kommunikation ausführen, wobei das Verfahren die Schritte umfasst:

- Spezifizieren (S101) einer Synchronisations-Korrektur-Zielkommunikationseinrichtung gemäß der Information über die eine oder die mehreren zweiten Kommunikationseinrichtungen (#1, #2, --- #n), die im Voraus in einem Speicherabschnitt für Information über verbundene Einrichtungen (11) gespeichert ist;

- Senden (S102) eines Übertragungskanal-Verzögerungsnessblocks (8-b) zu der Synchronisations-Korrektur-Zielkommunikationseinrichtung und gleichzeitig Speichern einer Sendezeit;
- wenn Rücklaufdaten aus der Synchronisations-Korrektur-Zielkommunikationseinrichtung empfangen werden, Speichern (S104) einer Empfangszeit, und
- wenn keine Rücklaufdaten empfangen werden (S103), zusätzlich Schreiben (S105) eines Verzögerungsmessfehlers in den Speicherabschnitt für Information über verbundene Einrichtungen (11);
- Berechnen (S106) einer Übertragungskanal-Verzögerungszeit aus der Sendezeit und der Empfangszeit und zusätzlich Schreiben der Übertragungskanal-Verzögerungszeit in den Speicherabschnitt für Information über verbundene Einrichtungen (11); und
- Bekanntgeben (S109) der berechneten Übertragungskanal-Verzögerungszeit an die Synchronisations-Korrektur-Zielkommunikationseinrichtung,

wobei die erste Kommunikationseinrichtung (1) die Schritte für jede der einen oder mehreren zweiten Kommunikationseinrichtungen (#1, #2, --- #n) wiederholt, die in dem Speicherabschnitt für Information über verbundene Einrichtungen (11) gespeichert sind, und dann eine synchronisierte Kommunikation beginnt.

10. Synchronisiertes Kommunikationsverfahren nach Anspruch 8 oder 9, das während der synchronisierten Kommunikation, nachdem die erste Kommunikationseinrichtung (1) eine vorbestimmte Kommunikation ausführt, die das Senden eines Synchronisationsblocks (8-c) und eines Befehlsblocks (8-d) zu der einen oder den mehreren zweiten Kommunikationseinrichtungen (#1, #2, --- #n) und den Empfang von Antwortblöcken (8-d) aus der einen oder den mehreren zweiten Kommunikationseinrichtungen (#1, #2, --- #n) umfasst, ferner die Schritte umfasst:

- Prüfen (S202) einer Antwort aus den mindestens zwei zweiten Kommunikationseinrichtungen (#1, #2), für die ein Verzögerungsmessfehler in dem Speicherabschnitt für Information über verbundene Einrichtungen (11) gespeichert ist;
- wenn keine Antwort empfangen wird, Warten (S208) auf das Ende des Kommunikationszyklus und wieder Ausführen (201) einer synchronisierten Kommunikation;
- wenn eine Antwort empfangen wird, Berechnen einer Übertragungskanal-Verzögerungsmesszeit und Prüfen (S203), ob eine Übertragungskanal-Verzögerungsmessung innerhalb einer verbleibenden Zeit in dem Kommunikationszyklus möglich ist;
- wenn eine Übertragungskanal-Verzögerungsmessung nicht innerhalb der verbleibenden Zeit möglich ist, Warten (S208) auf das Ende des Kommunikationszyklus und wieder Ausführen (S201) einer synchronisierten Kommunikation;
- wenn eine Übertragungskanal-Verzögerungsmessung in der verbleibenden Zeit möglich ist, Spezifizieren (S204) einer Synchronisations-Korrektur-Zielkommunikationseinrichtung;
- Senden (S205) eines Übertragungskanal-Verzögerungsmessblocks (8-b) an die Synchronisations-Korrektur-Zielkommunikationseinrichtung und gleichzeitig Speichern einer Sendezeit;
- wenn Rücklaufdaten aus der Synchronisations-Korrektur-Zielkommunikationseinrichtung empfangen werden, Speichern (S207) einer Anfangszeit, und wenn keine Rücklaufdaten empfangen werden, Warten (S208) auf das Ende des Kommunikationszyklus und wieder Ausführen (S201) einer synchronisierten Kommunikation;
- Berechnen (S209) einer Übertragungskanal-Verzögerungszeit aus der Sendezeit und der Empfangszeit und zusätzliches Schreiben der Übertragungskanal-Verzögerungszeit in den Speicherabschnitt für Information über verbundene Einrichtungen (11);
- Bekanntgeben (S211) der berechneten Übertragungskanal-Verzögerungszeit an die Synchronisations-Korrektur-Zielkommunikationseinrichtung; und
- Warten (S213) auf das Ende des Kommunikationszyklus und wieder Ausführen einer synchronisierten Kommunikation.

11. Synchronisiertes Kommunikationsverfahren nach Anspruch 10, wobei die Übertragungskanal-Verzögerungsmesszeit unter Anwendung eines maximalen Wertes von Übertragungskanal-Verzögerungszeiten (615), die in dem Speicherabschnitt für Information über verbundene Einrichtungen (11) gespeichert sind, der Häufigkeit der Ausführung der Verzögerungsmessung und der Weiterleitungszeit in einer Kommunikationseinrichtung, die durch den Schaltungsaufbau bestimmt ist, berechnet wird.

12. Synchronisiertes Kommunikationsverfahren nach einem der Ansprüche 8 bis 10, wobei jede der einen oder mehreren zweiten Kommunikationseinrichtungen (#1, #2, --- #n) bei Spezifizierung als eine Synchronisations-Korrektur-Zielkommunikationseinrichtung durch die erste Kommunikationseinrichtung (1) die Schritte ausführt: Einstellen eines Kanalauswahlschalters (250) derart, dass empfangene Daten an einen Ursprung der empfangenen Daten zurückgeleitet werden, Verbinden des Kanalauswahlschalters (250) mit einem Weiterleitungsziel, wenn die eine oder die mehreren zweiten Kommunikationseinrichtungen (#1, #2, --- #n) den Übertragungskanal-Verzögerungsmessblock (8-b) aus der ersten Kommunikationseinrichtung (1) empfangen haben und eine ÜbertragungskanalVerzögerungszeit bekannt gegeben worden ist, und Korrigieren eines geräteinternen Referenzzeitgebers (241) unter Anwendung der Übertragungskanal-Verzögerungszeit und einer Referenzzeit, die in einem Synchronisationsblock (8-c) enthalten sind, der von der ersten Kommunikationseinrichtung (1) gesendet wurde, wodurch eine Synchronisation zwischen der Referenzzeit und dem geräteinternen Referenzzeitgeber (241) ausgeführt wird.

13. Synchronisiertes Kommunikationsverfahren nach einem der Ansprüche 8 bis 10, wobei jede der einen oder der mehreren zweiten Kommunikationseinrichtungen (#1, #2, --- #n) eine Häufigkeit einer ausgeführten Verzögerungsmessung speichert, wobei die Häufigkeit in dem Synchronisations-Korrektur-Zielspezifizierungsblock (8-a) enthalten ist, den Kanalauswahlschalter (250) mit einem Weiterleitungsziel nach Empfang eines Übertragungskanal-Verzögerungsmessblocks (8-b) verbindet, der die Häufigkeit von Verzögerungsmessungen + 1 enthält, bei Empfang eines Übertragungskanal-Verzögerungsmessblocks (8-b) eine Übertragungskanal-Verzögerungszeit (615) speichert, die in dem Übertragungskanal-Verzögerungsmessblock (8-b) enthalten ist, und einen geräteinternen Referenzzeitgeber (241) unter Anwendung der Übertragungskanal-Verzögerungszeit und einem aktuellen Referenzzeitwert, die in einem nachfolgend empfangenen Synchronisationsblock (8-c) enthalten sind, korrigiert.

## Revendications

1. Dispositif de communication synchronisé comprenant un premier dispositif de communication (1) et un ou plusieurs seconds dispositifs de communication (#1, #2, ---, #n) qui mettent en oeuvre une communication suivant un cycle de communication prédéterminé et comprennent respectivement des première et seconde sections PHY (110, 210) configurées de manière à convertir un signal logique en un signal électrique et une section de liaison (140, 240), dans lequel la seconde section PHY de chaque dispositif de communication est raccordée à la première section PHY d'un autre dispositif de communication, **caractérisé en ce que** :

la première section PHY (110, 210) est configurée de manière à être raccordée respectivement à la seconde section PHY (110, 210) par un premier trajet relais (160, 260) par l'intermédiaire d'une première section de réception du type premier entré-premier sorti (Rx FIFO) (130, 230) afin de recevoir des données à partir de la première section PHY (110, 210) et d'une première section d'émission du type premier entré-premier sorti (Tx FIFO) (120, 220) afin de délivrer les données reçues aux secondes sections PHY (110, 210), alors que la seconde section PHY (110, 210) est configurée de manière à être raccordée respectivement à la première section PHY (110, 210) par un second trajet relais (160, 260) par l'intermédiaire d'une seconde section de réception du type premier entré-premier sorti (Rx FIFO) (130, 230) qui reçoit des données à partir de la seconde section PHY (110, 210) et d'une seconde section d'émission du type premier entré-premier sorti (Tx FIFO) (120, 220) qui délivre les données reçues à la première section PHY (110, 210) ;
chacune des sections de liaison (140, 240) est raccordée aux premier et second trajets relais correspondants (160, 260) et comporte un séquenceur de référence intégré au dispositif (141, 241) afin de produire un signal d'interruption suivant une séquence prédéfinie ;
la section de liaison (140) du premier dispositif de communication (1) est configurée de manière à envoyer un bloc de spécification de consigne de correction de synchronisation, un bloc de mesure de délai de trajet d'émission et un bloc de synchronisation ;
chacun des premier et second trajets relais (260) du ou des seconds dispositifs de communication (#1, #2, ---, #n) comporte un commutateur de sélection de trajet (250) inséré et raccordé respectivement à une première extrémité d'un trajet de retour (261), les commutateurs de sélection de trajet (250) étant raccordés à l'autre extrémité d'un trajet de retour (261) lorsque le commutateur de sélection de trajet (250) interrompt les premier et second trajets relais correspondants (260), le fonctionnement des commutateurs de sélection de trajet (250) étant assuré au même instant ; dans lequel
le premier dispositif de communication (1) mesure séparément les valeurs de délai de trajet d'émission (615) vers le ou les seconds dispositifs de communication (#1, #2,--, #n), notifie séparément aux dispositifs (#1, #2, ---, #n) la valeur de délai de trajet d'émission correspondante (615), et envoie une valeur de temps de référence courante (616) sur le dispositif de communication pour chaque cycle de communication ; et
chacun du ou des seconds dispositifs de communication (#1, #2, ---, #n) est configuré de manière à corriger la valeur de temps de référence courante (616) en utilisant la valeur de délai de trajet d'émission correspondante annoncée (615) et positionne la valeur corrigée sur le séquenceur de référence intégré au dispositif (141, 241) de celui-ci.

**2.** Dispositif de communication synchronisé selon la revendication 1, dans lequel le premier dispositif de communication (1) est configuré de manière à mémoriser un instant de sortie d'interruption (617) dans le bloc de synchronisation (8-c) et à envoyer le bloc de synchronisation (8-c) au ou aux seconds dispositifs de communication (#1, #2, ---, #n), et chacun du ou des seconds dispositifs de communication (#1, #2, ---, #n) est configuré de manière à positionner l'instant de sortie d'interruption reçu (617) dans le séquenceur de référence intégré au dispositif (241) et à délivrer un signal d'interruption de synchronisation lorsqu'une valeur de la temporisation a atteint l'instant de sortie d'interruption (617).

**3.** Dispositif de communication synchronisé selon la revendication 1 ou 2, dans lequel, après que le premier dispositif de communication (1) a initié une communication synchronisée avec un cycle de communication constant comportant l'envoi d'un bloc de synchronisation (8-c) et d'un bloc d'instruction (8-d) au ou aux seconds dispositifs de communication (#1, #2, ---, #n) et la réception de blocs de réponse (8-e) du ou des seconds dispositifs de communication (#1, #2, ---, #n), lorsque le premier dispositif de communication (1) détecte le ou les seconds dispositifs de communication (#1, #2, ---, #n) qui ont été nouvellement couplés au dispositif de communication synchronisé au cours de la communication synchronisée avec le ou les seconds dispositifs de communication (#1, #2, ---, #n), le premier dispositif de communication (1) est configuré de manière à mesurer un délai de trajet d'émission (615) vers le ou les seconds dispositifs de communication (#1, #2, ---, #n) et notifier le ou les seconds dispositifs de communication (#1, #2, ---, #n) du délai de trajet d'émission (615) au cours d'une période résiduelle après que la communication prédéterminée a été mise en oeuvre dans le cycle de communication.

**4.** Premier dispositif de communication (1) mettant en oeuvre une communication dans un cycle de communication prédéterminé et comprenant des première et seconde sections PHY (110) configurées de manière à convertir un signal logique en un signal électrique et une section de liaison (140),
dans lequel la seconde section PHY de chaque dispositif de communication est couplée à la première section PHY d'un autre dispositif de communication, **caractérisé en ce que** :

la première section PHY (110) est configurée de manière à être raccordée à la seconde section PHY (110) par un premier trajet relais (160) par l'intermédiaire d'une première section de réception du type premier entré-premier sorti (Rx FIFO) (130) afin de recevoir des données à partir de la première section PHY (110) et d'une première section d'émission du type premier entré-premier sorti (Tx FIFO) (120) afin de délivrer les données reçues aux secondes sections PHY (110), alors que la seconde section PHY (110) est configurée de manière à être raccordée respectivement à la première section PHY (110) par un second trajet relais (160) par l'intermédiaire d'une seconde section de réception du type premier entré-premier sorti (Rx FIFO) (130) qui reçoit des données à partir de la seconde section PHY (110) et d'une seconde section d'émission du type premier entré-premier sorti (Tx FIFO) (120) qui délivre les données reçues aux premières sections PHY (110) ;
la section de liaison (140) est raccordée aux premier et second trajets relais (160) et comporte un séquenceur de référence intégré au dispositif (141) afin de produire un signal d'interruption suivant une séquence prédéfinie ;
la section de liaison (140) du premier dispositif de communication (1) est configurée de manière à envoyer un bloc de spécification de consigne de correction de synchronisation, un bloc de mesure de délai de trajet d'émission et un bloc de synchronisation ; dans lequel
le premier dispositif de communication (1) mesure de manière séparée les délais de trajet d'émission (615) à envoyer à un ou plusieurs seconds dispositifs de communication (#1, #2, ---, #n), notifie séparément le délai de trajet d'émission correspondant (615), et envoie une valeur courante de temps de référence (616) dans le dispositif de communication pour chaque cycle de communication.

**5.** Premier dispositif de communication (1) selon la revendication 4, dans lequel chacune des sections de réception Rx FIFO (130) comporte une section de détection de signal SFD (signal de début de bloc) (115) disposée en amont de celle-ci, et lors de la détection d'un signal SFD qui suit un préambule dans des données reçues par l'une des sections PHY (110), une correspondante des sections de détection de signal SFD (115) transfère immédiatement les données reçues sur le trajet d'émission à partir de l'autre section PHY (110).

**6.** Ensemble de seconds dispositifs de communication (#1, #2, ---, #n) destiné à mettre en oeuvre une communication suivant un cycle de communication prédéterminé et comprenant des première et seconde sections PHY (210) configurées de manière à convertir un signal logique en un signal électrique et une section de liaison (240),
dans lequel la seconde section PHY de chaque dispositif de communication est raccordée à la première section PHY d'un autre dispositif de communication, **caractérisé en ce que** :

la première section PHY (210) est configurée de manière à être raccordée à la seconde section PHY (210) par un premier trajet relais (260) par l'intermédiaire d'une première section de réception du type premier entré-premier sorti (Rx FIFO) (230) afin de recevoir des données à partir de la première section PHY (210) et d'une première section d'émission du type premier entré-premier sorti (Tx FIFO) (220) destinée à délivrer les données reçues aux secondes sections PHY (210), alors que la seconde section PHY (210) est configurée de manière à être raccordée respectivement à la première section PHY (210) par un second trajet relais (260) par l'intermédiaire d'une seconde section de réception du type premier entré-premier sorti (Rx FIFO) (230) qui reçoit des données à partir de la seconde section PHY (210) et d'une seconde section d'émission du type premier entré-premier sorti (Tx FIFO) (220) qui délivre les données reçues aux premières sections PHY (210) ;

la section de liaison (240) est raccordée aux premier et second trajets relais correspondants (260) et comporte un séquenceur de référence intégré au dispositif (241) afin de produire un signal d'interruption suivant une séquence prédéfinie ;

chacun des premier et second trajets relais (260) du ou des seconds dispositifs de communication (#1, #2, ---, #n) comporte un commutateur de sélection de trajet (250) inséré et est raccordé respectivement à une première extrémité d'un trajet de retour (261), les commutateurs de sélection de trajet (250) étant raccordés à l'autre extrémité du trajet de retour (261) lorsque le commutateur de sélection de trajet (250) interrompt les premier et second trajets relais (260), le fonctionnement des commutateurs de sélection de trajet (250) étant assuré au même instant ; dans lequel

lorsqu'une valeur de temps de référence courante (616) est notifiée, chacun du ou des seconds dispositifs de communication (#1, #2, ---, #n) est configuré de manière à corriger la valeur de temps de référence courante (616) en utilisant le délai de trajet d'émission (615) notifié correspondant et positionne la valeur corrigée dans le séquenceur de référence intégré au dispositif (141, 241) de celui-ci.

7. Ensemble de seconds dispositifs de communication (#1, #2, ---, #n) selon la revendication 6, dans lequel chacune des section de réception Rx FIFO (230) comporte une section de détection de signal SFD (signal de début de bloc) (215) disposée en amont de celle-ci, et lors de la détection d'un signal SFD qui suit un préambule dans des données reçues par l'une des sections PHY (210), l'une correspondante des sections de détection de signal SFD (215) transfère immédiatement les données reçues vers le trajet d'émission à partir de l'autre section PHY (210).

8. Procédé de communication synchronisé en utilisant un dispositif de communication synchronisé comprenant un premier dispositif de communication (1) et un ou plusieurs seconds dispositifs de communication (#1, #2, ---, #n) qui mettent en oeuvre une communication suivant un cycle de communication prédéterminé et comprennent respectivement des première et seconde sections PHY (110, 210) configurées de manière à convertir un signal logique en un signal électrique et une section de liaison (140, 240),

dans lequel la seconde section PHY de chaque dispositif de communication est raccordée à la première section PHY d'un autre dispositif de communication, **caractérisé en ce que** :

la première section PHY (110, 210) est configurée respectivement de manière à être raccordée à la seconde section PHY (110, 210) par un premier trajet relais (160, 260) par l'intermédiaire d'une première section de réception du type premier entré-premier sorti (Rx FIFO) (130, 230) afin de recevoir des données à partir de la première section PHY (110, 210) et d'une première section d'émission du type premier entré-premier sorti (Tx FIFO) (120, 220) afin de délivrer les données reçues aux secondes sections PHY (110, 210), alors que la seconde section PHY (110, 210) est configurée respectivement de manière à être raccordée à la première section PHY (110, 210) par un second trajet relais (160, 260) par l'intermédiaire d'une seconde section de réception du type premier entré-premier sorti (Rx FIFO) (130, 230) qui reçoit des données à partir de la seconde section PHY (110, 210) et d'une seconde section d'émission du type premier entré-premier sorti (Tx FIFO) (120, 220) qui délivre les données reçues aux premières sections PHY (110, 210) ;

chacune des sections de liaison (140, 240) est raccordée aux premier et second trajets relais correspondants (160, 260) et comporte un séquenceur de référence intégré au dispositif (141, 241) afin de produire un signal d'interruption suivant une séquence prédéfinie ; chacun des premier et second trajets relais (260) du ou des seconds dispositifs de communication (#1, #2, ---, #n) comporte un commutateur de sélection de trajet (250) inséré et est raccordé respectivement à une première extrémité d'un trajet de retour (261), les commutateurs de sélection de trajet (250) étant raccordés à l'autre extrémité du trajet de retour (261) lorsque le commutateur de sélection de trajet (250) interrompt les premier et second trajets relais correspondant (260), le fonctionnement des commutateurs de sélection de trajet (250) étant assuré au même instant ; le procédé comprenant les étapes de :

envoi d'un bloc de spécification de consigne de correction de synchronisation, d'un bloc de mesure de délai de trajet d'émission et d'un bloc de synchronisation par la section de liaison (140) du premier dispositif de communication (1) ;

mesure de manière séparée, par le premier dispositif de communication (1), des délais de trajet d'émission (615) vers le ou les seconds dispositifs de communication (#1, #2, ---, #n) ;

notification de manière séparée du délai de trajet d'émission correspondant (615) aux dispositifs (#1, #2, ---, #n) ;

envoi d'une valeur de temps de référence courante (616) dans le dispositif de communication pour chaque cycle de communication ;

correction, par chacun du ou des seconds dispositifs de communication (#1, #2,-, #n), de la valeur de temps de référence courante (616) en utilisant le délai de trajet d'émission (615) notifié correspondant ; et

positionnement de la valeur corrigée dans le séquenceur de référence intégré au dispositif (141, 241) de celui-ci.

9. Procédé de communication synchronisé selon la revendication 8, dans lequel chacun des dispositifs de communication (1, #1, #2, ---, #n) comporte une section de commande de communication (100, 200) qui commande les données d'émission/réception et une section d'unité centrale hôte (10, 20) qui exécute une opération de calcul sur la base de données reçues par la section de commande de communication (100, 200) afin de créer des données d'émission, et dans lequel les dispositifs de communication (1, 2) mettent en oeuvre une communication synchronisée, le procédé comprenant les étapes de :

spécification (S101) d'un dispositif de communication de consigne de correction de synchronisation en fonction d'informations concernant le ou les seconds dispositifs de communication (#1, #2, ---, #n) qui sont mémorisées au préalable dans une section de mémorisation d'information de dispositif raccordé (11) ;

envoi (S102) d'un bloc de mesure de délai de trajet d'émission (8-b) au dispositif de communication de consigne de correction de synchronisation et au même instant, mémorisation d'une durée d'envoi ;

en cas de réception de données de retour à partir du dispositif de communication de consigne de correction de synchronisation, mémorisation (S104) d'une durée de réception, et

en cas de non réception de donnée de retour (S103), complément d'écriture (S105) d'échec de mesure de délai dans la section de mémorisation d'information de dispositif raccordé (11) ;

calcul (S106) d'une valeur de délai de trajet d'émission à partir de l'instant d'envoi et de l'instant de réception, et écriture supplémentaire du délai de trajet d'émission dans la section de mémorisation d'information de dispositif raccordé (11) ; et

notification (S109) au dispositif de communication de consigne de correction de synchronisation du délai de trajet d'émission calculé,

dans lequel le premier dispositif de communication (1) répète les étapes sur l'ensemble du ou des seconds dispositifs de communication (#1, #2, ---, #n) mémorisés dans la section de stockage d'information de dispositif couplé (11) et initie alors une communication synchronisée.

10. Procédé de communication synchronisé selon la revendication 8 ou 9, comprenant, en outre, les étapes de, au cours de la communication synchronisée, après que le premier dispositif de communication (1) a mis en oeuvre une communication prédéterminée comportant l'envoi d'un bloc de synchronisation (8-c) et d'un bloc d'instruction (8-d) au ou aux seconds dispositifs de communication (#1, #2, ---, #n) et la réception de blocs de réponse (8-e) du ou des seconds dispositifs de communication (#1, #2, ---, #n) :

contrôle (S202) d'une réponse à partir des au moins deux seconds dispositifs de communication (#1, #2) : pour lequel l'échec de la mesure du délai est mémorisé dans la section de mémorisation d'information de dispositif raccordé (11) ;

lorsqu'aucune réponse n'est reçue, attente (S208) de la fin du cycle de communication et, de nouveau, mise en oeuvre (S201) d'une communication synchronisée ;

lorsqu'une réponse est reçue, calcul d'un temps de mesure de délai de trajet d'émission et contrôle (S203) du fait que la mesure de délai de trajet d'émission est possible dans un temps résiduel à l'intérieur du cycle de communication ;

lorsque la mesure de délai de trajet d'émission n'est pas possible à l'intérieur du temps résiduel, attente (S208) de la fin du cycle de communication et de nouveau, mise en oeuvre (S201) d'une communication synchronisée ;

lorsque la mesure de délai de trajet d'émission est possible à l'intérieur du temps résiduel, spécification (S204) d'un dispositif de communication de consigne de correction de synchronisation ;

envoi (S205) d'un bloc de mesure de délai de trajet d'émission (8-b) au dispositif de communication de consigne de correction de synchronisation et en même temps, la mémorisation d'un instant d'envoi ;

en cas de réception de données de retour à partir du dispositif de communication de consigne de correction de synchronisation, mémorisation (S207) d'un instant de réception, et en cas de non réception de donnée de retour, attente (S208) de la fin du cycle de communication et, de nouveau, mise en oeuvre (S201) d'une communication synchronisée ;

calcul (S209) d'une valeur de délai de trajet d'émission à partir de l'instant d'envoi et de l'instant de réception et, en outre, écriture de la valeur de délai de trajet d'émission dans la section de mémorisation d'information de dispositif raccordé (11) ;

notification (S211) au dispositif de communication de consigne de correction de synchronisation du délai de trajet d'émission calculé ; et

attente (S213) de la fin du cycle de communication et, de nouveau, mise en oeuvre d'une communication synchronisée.

11. Procédé de communication synchronisé selon la revendication 10, dans lequel le temps de mesure de délai de trajet d'émission est calculé en utilisant une valeur maximum des valeurs de délai de trajet d'émission (615) mémorisés dans la section de mémorisation d'information de dispositif raccordé (11), le nombre de fois que la mesure de délai a été mise en oeuvre, et un temps de relais dans un dispositif de communication est déterminé par la configuration de circuit.

12. Procédé de communication synchronisé selon l'une quelconque des revendications 8 à 10, dans lequel chacun du ou des seconds dispositifs de communication (#1, #2, ---, #n), lorsqu'ils sont spécifiés en tant que dispositif de communication de consigne de correction de synchronisation par le premier dispositif de communication (1), exécute les étapes de positionnement d'un commutateur de sélection de trajet (250) afin de renvoyer des données reçues vers une source des données reçues, couplant le commutateur de sélection de trajet (250) vers une destination de relais dans un cas dans lequel le ou les seconds dispositifs de communication (#1, #2, ---, #n) ont reçu le bloc de mesure de délai de trajet d'émission (8-b) à partir du premier dispositif de communication (1) et ont été informés d'une valeur de délai de trajet d'émission, et corrigeant un séquenceur de référence intégré au dispositif (241) en utilisant la valeur de délai de trajet d'émission et un temps de référence contenu dans un bloc de synchronisation (8-c) envoyé à partir du premier dispositif de communication (1), mettant ainsi en oeuvre une synchronisation entre le temps de référence et le séquenceur de référence intégré au dispositif (241).

13. Procédé de communication synchronisé selon l'une quelconque des revendications 8 à 10, dans lequel chacun du ou des seconds dispositifs de communication (#1, #2, ---, #n) mémorise un certain nombre de fois la mesure de délai réalisée, le nombre de fois étant contenu dans le bloc de spécification de consigne de correction de synchronisation (8-a), couple le commutateur de sélection de trajet (250) à une destination de relais après réception d'un bloc de mesure de délai de trajet d'émission (8-b) contenant le nombre de fois + 1 que la mesure de délai a été réalisée, lors de la réception d'un bloc de mesure de délai de trajet d'émission (8-b), mémorise une valeur de délai de trajet d'émission (615) contenue dans le bloc de mesure de délai de trajet d'émission (8-b), et corrige un séquenceur de référence intégré au dispositif (241) en utilisant la valeur de délai de trajet d'émission et une valeur de temps de référence courante contenue dans un bloc de synchronisation (8-c) reçu ultérieurement.

Fig. 1

EP 2 139 152 B1

# Fig. 2

# Fig. 3

21

211

212

213

# Fig. 4

5

5

5

1

2

3

4

## Fig. 5

START

SPECIFY SYNCHRONIZATION-CORRECTION-TARGET COMMUNICATION DEVICE AND SEND SYNCHRONIZATION-CORRECTION-TARGET SPECIFYING DATA CONTAINING NUMBER OF TIMES OF DELAY MEASUREMENT TO SPECIFIED COMMUNICATION DEVICE —— S101

SEND TRANSMISSION PATH DELAY MEASUREMENT DATA TO SYNCHRONIZATION-CORRECTION-TARGETCOMMUNICATION DEVICE AND STORE SENDING TIME —— S102

RETURN DATA RECEIVED? —— S103

NO

YES

STORE RETURN RECEIVING TIME —— S104

STORE DELAY MEASUREMENT FAILURE INTO CONNECTED-DEVICE INFORMATION STORAGE SECTION —— S105

CALCULATE TRANSMISSION PATH DELAY TIME AND STORE IT INTO CONNECTED-DEVICE INFORMATION STORAGE SECTION AND TRANSMISSION PATH DELAY MEASUREMENT DATA —— S106

NO

TRANSMISSION PATH DELAY MEASUREMENT DATA SENT THE NUMBER OF TIMES OF DELAY MEASUREMENT? —— S107

YES

CALCULATE OPTIMUM TRANSMISSION PATH DELAY TIME AND STORE IT INTO CONNECTED-DEVICE INFORMATION STORAGE SECTION —— S108

SEND TRANSMISSION PATH DELAY MEASUREMENT DATA CONTAINING OPTIMUM TRANSMISSION PATH DELAY TIME —— S109

DELAY MEASUREMENT COMPLETED FOR CONNECTABLE NUMBER REGISTERED IN STORAGE SECTION? —— S110

NO

YES

START SYNCHRONIZED COMMUNICATION —— S111

UPDATE SYNCHRONIZATION-CORRECTION-TARGET COMMUNICATION DEVICE —— S112

END

## Fig. 6

```
                          START

                                                          S301
        RECEIVE SYNCHRONIZATION-CORRECTION-TARGET
            SPECIFYING DATA DESTINED THERETO

                                                          S302
    STORE NUMBER OF TIMES OF DELAY MEASUREMENT CONTAINED
     IN SYNCHRONIZATION-CORRECTION-TARGET SPECIFYING DATA
           INTO LOCAL INFORMATION STORAGE SECTION

                                                          S303
           SET TO RETURN RECEIVED DATA TO
           SOURCE USING PATH SELECTION SWITCH

                                                          S304
              TRANSMISSION PATH DELAY
            MEASUREMENT DATA RECEIVED?          NO

                       YES
                                                          S305
        STORE TRANSMISSION PATH DELAY TIME INTO
           LOCAL INFORMATION STORAGE SECTION

                                                          S306
         TRANSMISSION PATH DELAY MEASUREMENT
            DATA RECEIVED (NUMBER OF TIMES OF
            DELAY MEASUREMENT + 1) TIMES?       NO

                       YES
                                                          S307
        CONNECT REPEAT PATH USING PATH SELECTION SWITCH

                                                          S308
          SYNCHRONIZATION FRAME RECEIVED?        NO

                       YES
                                                          S309
           CORRECT IN-DEVICE REFERENCE TIMER USING
      REFERENCE TIME AND TRANSMISSION PATH DELAY TIME

                           END
```

## Fig. 7

START

PERFORM SYNCHRONIZED COMMUNICATION WITH ANOTHER COMMUNICATION DEVICE REGISTERED IN CONNECTION INFORMATION STORAGE SECTION ⟶ S201

RESPONSE RECEIVED FROM DELAY-MEASUREMENT-FAILURE COMMUNICATION DEVICE? ⟶ S202

NO

YES

TRANSMISSION PATH DELAY MEASUREMENT POSSIBLE WITHIN COMMUNICATION CYCLE REMAINING TIME? ⟶ S203

NO

YES

SPECIFY DELAY-MEASUREMENT-FAILURE COMMUNICATION DEVICE, AND SEND SYNCHRONIZATION-CORRECTION-TARGET SPECIFYING DATA CONTAINING NUMBER OF TIMES OF DELAY MEASUREMENT TO SPECIFIED COMMUNICATION DEVICE ⟶ S204

SEND TRANSMISSION PATH DELAY MEASUREMENT DATA TO DELAY-MEASUREMENT-FAILURE COMMUNICATION DEVICE, AND STORE SENDING TIME ⟶ S205

RETURN DATA RECEIVED? ⟶ S206

NO

YES

STORE RETURN RECEIVING TIME ⟶ S207

WAIT FOR END OF COMMUNICATION CYCLE ⟶ S208

CALCULATE TRANSMISSION PATH DELAY TIME AND STORE IT INTO CONNECTED-DEVICE INFORMATION STORAGE SECTION AND TRANSMISSION PATH DELAY MEASUREMENT DATA ⟶ S209

TRANSMISSION PATH DELAY MEASUREMENT DATA SENT THE NUMBER OF TIMES OF DELAY MEASUREMENT? ⟶ S210

NO

YES

CALCULATE OPTIMUM TRANSMISSION PATH DELAY TIME AND STORE IT INTO CONNECTED-DEVICE INFORMATION STORAGE SECTION ⟶ S211

SEND TRANSMISSION PATH DELAY MEASUREMENT DATA CONTAINING OPTIMUM TRANSMISSION PATH DELAY TIME ⟶ S212

WAIT FOR END OF COMMUNICATION CYCLE ⟶ S213

# Fig. 8

500  501  601  602  603  604  605  606

( 8-a )

500  501  601  602  603  604  615  606

( 8-b )

500  501  601  602  603  604  616  617  606

↑
TRANSFER START POSITION IN SYSTEM OF PRESENT INVENTION

( 8-c )

500  501  601  602  603  604  618  606

( 8-d )

500  501  601  602  603  604  619  606

( 8-e )

EP 2 139 152 B1

Fig. 9

# Fig. 10

500   501   601   602   603   620   606

TRANSFER START POSITION IN CONVENTIONAL SYSTEM

(10-a)

(10-b)

# Fig. 11

(11-a)

(11-b)

# Fig. 12

FIRST
COMMUNICATION
DEVICE

VALUE OF
IN-DEVICE
REFERENCE
TIMER 141

INTERRUPT
OUTPUT TIME

INTERRUPT SIGNAL 118
(SYNCHRONIZATION
INTERRUPT SIGNAL)

S

SYNCHRONIZATION
FRAME (SEND)

SECOND
COMMUNICATION
DEVICE #1

Tdly_1

VALUE OF
IN-DEVICE
REFERENCE
TIMER 241

INTERRUPT
OUTPUT TIME

CORRECTION OF IN-
DEVICE REFERENCE
TIMER 241

INTERRUPT SIGNAL 218
(SYNCHRONIZATION
INTERRUPT SIGNAL)

Tdly_1

S

SYNCHRONIZA
TION FRAME
(RECEIVE)

SECOND
COMMUNICATION
DEVICE #2

Tdly_2

VALUE OF
IN-DEVICE
REFERENCE
TIMER 241

INTERRUPT
OUTPUT TIME

CORRECTION
OF IN-DEVICE
REFERENCE
TIMER 241

INTERRUPT SIGNAL 218
(SYNCHRONIZATION
INTERRUPT SIGNAL)

Tdly_2

S

SYNCHRONIZATION
FRAME (RECEIVE)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000503828 W
- JP 10142361 A
- EP 0515029 A1
- WO 03028258 A1